# EUROPEAN PATENT SPECIFICATION

(11) **EP 0 793 936 B1**
(45) Date of publication and mention of the grant of the patent: **12.07.2000**
(21) Application number: 97103485.5
(22) Date of filing: 04.03.1997
(51) Int. Cl.: A47J 41/00

(54) **Thermally insulated synthetic resin container and thermally insulated synthetic resin lid**
Wärmeisolierter Kunststoffbehälter und wärmeisolierter Kunststoffdeckel
Récipient et couvercle en plastique munis d'isolation thermique

(30) Priority: 07.03.1996 JP 5054796; 16.04.1996 JP 9452196
(43) Date of publication of application: 10.09.1997
(73) Proprietor: NIPPON SANSO CORPORATION, Tokyo 105 (JP)
(72) Inventor: Fujii, Takafumi, c/o Nippon Sanso Corporation, Minato-ku, Tokyo 105 (JP); Kamachi, Hidefumi, c/o Nippon Sanso Corporation, Minato-ku, Tokyo 105 (JP); Furuyama, Kensuke, c/o Nippon Sanso Corporation, Minato-ku, Tokyo 105 (JP); Tanaka, Atsuhiko, c/o Nippon Sanso Corporation, Minato-ku, Tokyo 105 (JP); Yamada, Masashi, c/o Nippon Sanso Corporation, Minato-ku, Tokyo 105 (JP)
(74) Representative: Munk, Ludwig, Dipl.-Ing.

(56) References cited:
- EP-A- 0 667 483
- EP-A- 0 733 330
- EP-A- 0 734 674
- EP-A- 0 741 989
- GB-A- 865 391
- US-A- 3 118 560
- US-A- 3 144 160
- PATENT ABSTRACTS OF JAPAN vol. 097, no. 003, 31 March 1997 & JP 08 285175 A (SHARP CORP)

## Description

### BACKGROUND OF THE INVENTION

### Technical Field of the Invention

The present invention relates to a thermally insulated synthetic resin container and thermally insulated synthetic resin lid having double-walled thermal insulator layers filled with a low thermal conductivity gas having a lower thermal conductivity than air held within space portions between the walls of a thermally insulated container and lid having a double-walled structure, specifically to a thermally insulated synthetic resin container and a thermally insulated synthetic resin lid for the purposes of warmth preservation and cold preservation in thermally insulated food vessels, cooler boxes and lunch jars.

### Background Art

As an example of a thermally insulated synthetic resin container proposed in the past, there is a type of thermally insulated container formed by molding an inner container and an outer container from synthetic resin material, housing the inner container inside the outer container while leaving a space portion therebetween, and filling this space portion with at least one type of gas selected from among xenon, krypton and argon. EP-A-0 667 483 and JP-07 101 475 show such a container.

In order to increase their gas-barrier capabilities, these thermally insulated synthetic resin containers have plating films formed on the outer surface of the inner container or the inner surface of the outer container.

When these types of plating films are formed on resins onto which the plating films can be directly formed, the inner surface of the inner container, the outer surface of the outer container and the joint surface between the inner and outer containers must be masked to prevent them from becoming plated. Since this type of masking requires high precision in their locations of formation, the masking costs are high and the electrical plating after masking is also expensive. Additionally, when forming masks, plating films can adhere to places where the mask coating has not attached or has peeled so as to blemish the appearance, and there is an influence on cost, freedom of design and durability due to the necessity for extra care with regard to safety of the mask coating and maintenance of the adherence to the resin.

In the case of resins on which plating films cannot be directly formed, the necessity for pre-treatments such as coating with ABS resins and the like to form the plating film results in cost increases.

Additionally, there is a restriction on the types of resins which can be used in order to increase the adherence of the plating film, so that some properties such as hardness and alkaline resistance of the synthetic resin must be sacrificed.

Furthermore, forming a plating film causes the synthetic resin to become unrecoverable in the event of recycling during disposal, thus increasing the cost.

Moreover, when using synthetic resins with high gas-barrier capabilities in forming thermally insulated containers, these types of resins are generally prone to absorb moisture and this moisture absorption results in reductions in the original gas-barrier function, so that the required capabilities cannot be obtained. Additionally, depending on the type of resin, there are problems such as having inadequate mechanical strength from the outset, or having reduced mechanical strength due to moisture absorption in the cases of resins which are highly moisture absorbent.

### SUMMARY OF THE INVENTION

The present invention offers a thermally insulated synthetic resin container which does not require the formation of a plating film, has high thermal insulation capabilities and exceptional durability, is easy to manufacture, low in cost, and allows easy recovery of synthetic resins. This is achieved by forming the thermally insulated container by providing a thermal insulator which is a double-walled body having a container structure, with low thermal conductivity gas sealed inside a space layer between the walls, placed inside a gap between an inner container and outer container.

Additionally, the present invention offers a thermally insulated synthetic resin lid which does not require the formation of a plating film, has high thermal insulation capabilities and exceptional durability, is easy to manufacture, low in cost, and allows easy recovery of synthetic resins. This is achieved by forming the thermally insulated lid by providing a lid thermal insulator which is a double-walled body, with low thermal conductivity gas sealed inside a space layer between the walls, placed inside a gap between a top surface wall and bottom surface wall.

The thermally insulated synthetic resin container according to the present invention comprises a double-walled container formed by joining a synthetic resin inner container accommodated inside a synthetic resin outer container with a gap provided therebetween; and a thermal insulator layer composed of a synthetic resin and having a double-walled structure; wherein a low thermal conductivity gas having a thermal conductivity less than that of air is sealed between the walls of the thermal insulator layer; and the thermal insulator layer is provided inside the gap between the inner container and the outer container.

The thermal insulator layer may have an inner wall element shaped to conform to the outer surface of the inner container and an outer wall element shaped to conform to the inner surface of the outer container; the inner wall element being accommodated inside the outer wall element with a space layer therebetween; a low thermal conductivity gas being sealed within the space layer; and an end portion of the inner wall element and an end portion of the outer wall element being joined together.

The thermal insulator layer may also be a double-walled thermal insulator formed as a single unit with the low thermal conductivity gas sealed between the walls.

The thermally insulated synthetic resin lid according to the present invention comprises a double-walled lid formed by joining a synthetic resin top surface wall and a synthetic resin bottom surface wall with a gap provided therebetween; and a lid thermal insulator layer composed of a synthetic resin and having a double-walled structure; wherein a low thermal conductivity gas having a thermal conductivity less than that of air is sealed between the walls of the lid thermal insulator layer; and the lid thermal insulator layer is provided inside the gap between the top surface wall and the bottom surface wall.

The thermal insulator layer may have a top wall element shaped to conform to the bottom surface of the top surface wall and a bottom wall element shaped to conform to the top surface of the bottom surface wall; the top wall element and the bottom wall element being provided with a space layer therebetween; a low thermal conductivity gas being sealed within the space layer; and an end portion of the top wall element and an end portion of the bottom wall element being joined together.

The lid thermal insulator layer may also be a double-walled thermal insulator formed as a single unit with the low thermal conductivity gas sealed between the walls.

Since the thermally insulated container of the present invention holds a synthetic resin thermal insulator layer having a gas-filled layer sealed with low thermal conductivity gas inside the gap in the double-walled container formed by accommodating a synthetic resin inner container inside a synthetic resin outer container and joining them together, the thermal insulator layer is able to be protected by the inner and outer containers so as to maintain the thermal insulation capabilities over a long period of time.

Additionally, since the thermally insulated container of the present invention does not require the formation of a plating film, the manufacturing costs of the thermally insulated container can be reduced, while the synthetic resins used in the formation of the thermally insulated container and the metallic foils used to reduce radiative heat transmission are easily recovered so as to be suitable for recycling of resources. Furthermore, the thermal insulator layer can be made thin by filling the insulating layer of the thermal insulator layer with a low thermal conductivity gas, thereby allowing the thermally insulated container to be made thin.

Since the lid for the thermally insulated container of the present invention holds a synthetic resin lid thermal insulator having a gas-filled layer sealed with low thermal conductivity gas inside the gap in the double-walled lid formed by between a synthetic resin top surface wall and a synthetic resin bottom surface wall, the lid thermal insulator layer is able to be protected by the top and bottom surface walls so as to maintain the thermal insulation capabilities over a long period of time.

Additionally, since the thermally insulated lid of the present invention does not require the formation of a plating film, the manufacturing costs of the thermally insulated lid can be reduced, while the synthetic resins used in the formation of the thermally insulated lid and the metallic foils used to reduce radiative heat transmission are easily recovered so as to be suitable for recycling of resources. Furthermore, the lid thermal insulator layer can be made thin by filling the insulating layer of the lid thermal insulator layer with a low thermal conductivity gas, thereby allowing the thermally insulated lid to be made thin.

### BRIEF EXPLANATION OF THE DRAWINGS

Fig. 1 is a section view showing a thermally insulated synthetic resin container and thermally insulated synthetic resin lid according to a first embodiment of the present invention.

Fig. 2 is a close-up section view showing the thermally insulated synthetic resin container of Fig. 1.

Fig. 3 is a close-up section view showing the thermally insulated synthetic resin container of Fig. 1.

Fig. 4 is a section view showing a thermally insulated synthetic resin container and thermally insulated synthetic resin lid according to a second embodiment of the present invention.

Fig. 5 is a close-up section view showing the thermally insulated synthetic resin container of Fig. 4.

Fig. 6 is a side view showing a double-walled container prior to sealing according to the second embodiment of the present invention.

Fig. 7 is a side view showing a double-walled container prior to sealing according to the second embodiment of the present invention.

Fig. 8 is a section view showing a thermally insulated synthetic resin container and thermally insulated synthetic resin lid according to a third embodiment of the present invention.

Fig. 9 is a close-up section view showing the thermally insulated synthetic resin container of Fig. 8.

Fig. 10 is a close-up section view showing the thermally insulated synthetic resin container of Fig. 8.

Fig. 11 is a section view showing a thermally insulated synthetic resin container and thermally insulated synthetic resin lid according to a fourth embodiment of the present invention.

Fig. 12 is a close-up section view showing the thermally insulated synthetic resin container of Fig. 11.

### PREFERRED EMBODIMENTS OF THE INVENTION

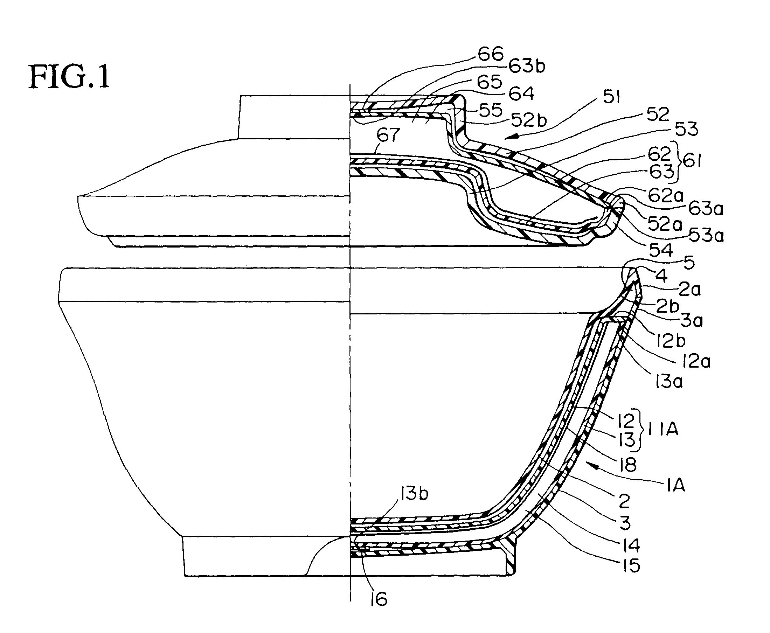

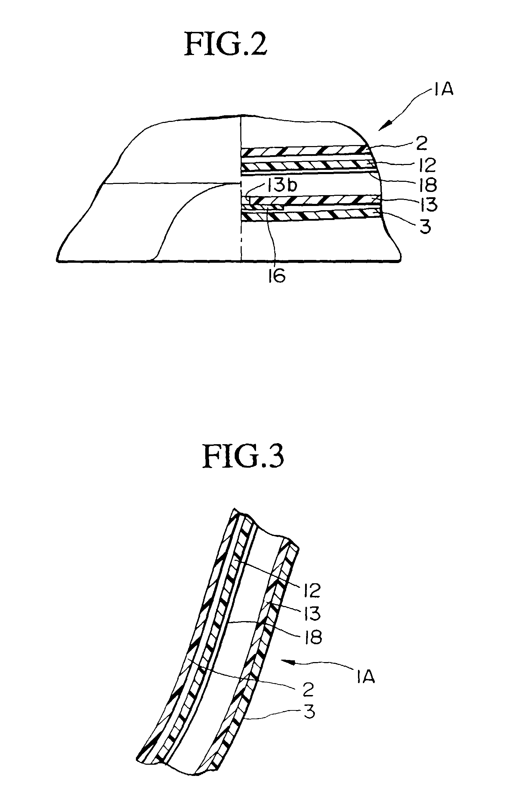

Figs. 1 through 3 show a first embodiment of the thermally insulated synthetic resin container and thermally insulated synthetic resin lid of the present invention. As shown in the drawings, a thermally insulated synthetic resin lid (hereinafter referred to simply as a lid) 51 covers a bowl-shaped thermally insulated synthetic resin container (hereinafter referred to simply as a thermally insulated container) 1A.

First, the thermally insulated container 1A will be explained. This thermally insulated container 1A is formed by an inner container 2 and outer container 3 between which there is a gap 5, in which is housed a double-walled thermal insulator layer 11A having a space layer 14 between the walls sealed with a low thermal conductivity gas. The thermal insulator layer 11A comprises an inner wall element 12 having a shape conforming to the outer surface of the inner container 2 and an outer wall element 13 having a shape conforming to the inner surface of the outer container 3, the inner wall element 12 and outer wall element 13 being formed by injection molding. An aperture portion 13b for filling low thermal conductivity gas is formed in the bottom portion of the outer wall element 13. While this aperture portion may be formed on either the inner wall element 12 or the outer wall element 13, it should preferably be formed in the bottom portion of the inner wall element 12 or the bottom portion of the outer wall element 13. Here, the case wherein the aperture portion 13b is formed on the bottom portion of the outer wall element 13 will be explained.

As the resin used for the inner wall element 12 and the outer wall element 13, a synthetic resin material with excellent gas-barrier capabilities (hereinafter referred to as high gas-barrier synthetic resins), specifically, one type chosen from among synthetic resin materials such as polyvinyl alcohol resins, polyacrylonitrile resins, polyamide resins and polyester resins with gas permeabilities (ASTM Z 1434-58) of no more than 1 g/m²/24 hr/atm with respect to O₂, N₂ and CO₂ is used. The polyvinyl alcohol resins include copolymers of polyvinyl alcohols and ethylene or vinyl acetate esters as copolymer saponificants with ethylene. The polyacrylonitrile resins should include resins with base polymers containing at least 50 % acrylonitrile as a main component. The polyamide resins include mixed resins of polyamide and polypropylene or ABS resins. The polyester resins include mixed resins of polyester and polycarbonate.

Since these resins have excellent gas-barrier capabilities, when the inner wall element 12 and the outer wall element 13 are formed with these resins, it becomes unnecessary to provide gas-barrier barrier properties by forming plating films, so that the various procedures required for plating film formation can be omitted and the thermal insulator layer 11A can be manufactured at reduced cost.

Furthermore, as the resin used for the inner wall element 12 and the outer wall element 13, synthetic resins with excellent gas-barrier capabilities and high thermal resistance such as to have excellent mechanical strength, such as bending strength or creep resistance, in temperatures of close to 100°C are more preferably used. Examples of these resins include polyvinyl alcohol resins, ethylene-vinyl alcohol, polyacrylonitrile resins, nylon resins, polyester resins, polyethylenenaphthalate; mixed resins containing polypropylene, such as polypropylene and polyethyleneterephthalate, polypropylene and nylon, polypropylene and acrylonitrile, polypropylene and ethylene-vinyl alcohol, and polypropylene and polyvinyl alcohol; mixed resins containing polycarbonate, such as polycarbonate and polyethyleneterephthalate, polycarbonate and nylon, polycarbonate and acrylonitrile, and polycarbonate and ethylene-vinyl alcohol; and mixed resins containing at least two resins selected from the group consisting of polyester resins, polyamide, polyethylenenaphthalate, and ethylene-vinyl alcohol.

By using a synthetic resin material with excellent gas-barrier capabilities and high thermal resistance such as to have excellent mechanical strength in temperatures of close to 100°C for the inner wall element 12 and the outer wall element 13, the thermal insulator layer 11A will not deform even if the thermally insulated container lA is filled with hot water, thereby preventing the thermal insulator layer 11A from expanding and giving the thermal insulated container 1A a bloated appearance.

The inner wall element 12 and outer wall element 13 formed from these resins are adjoined by means of thermal welding methods such as vibration welding, spin welding and hot plate welding at their end portions 12a and 13a. Due to these welding methods, the surfaces of the inner wall element end portion 12a and the outer wall element end portion 13a are welded together, and the joint portions between the inner and outer wall element end portions 12a and 13a can be held airtight so as to increase the joint strength. The space layer 14 of the double-walled body obtained by joining the inner and outer wall elements 12 and 13 is filled with a low thermal conductivity gas through the aperture portion 13b, then this aperture portion 13b is sealed off by means of a sealing plate 16 using adhesive so as to form a thermal insulator layer in the space layer 14, thus resulting in the thermal insulator layer 11A.

As the adhesive used to seal the sealing plate 16, a cyanoacrylate or acetonitrile adhesive is used. These adhesives are highly airtight after hardening and provide immediate powerful adhesion, so as to provide a reliable seal for the low thermal conductivity gas filled in the space layer 14 of the thermal insulator layer 11A.

As the low thermal conductivity gas sealed within the space layer 14 of the thermal insulator layer 11A, it is preferable to use at least one type of gas chosen from among xenon, krypton and argon.

The thermal conductivities of the gases xenon (thermal conductivity κ = 0.52 × 10⁻² W·m⁻¹*·*K⁻¹; 0 °C), krypton (κ = 0.87 × 10⁻² W·m⁻¹·K⁻¹; 0 °C) and argon (κ = 1.63 × 10⁻² W·m⁻¹·K⁻¹; 0 °C) are less than the thermal conductivity of air (κ = 2.41 × 10⁻² W·m⁻¹·K⁻¹; 0 °C), and these are used alone or as combined gases of two or more types to fill at a sealing pressure of approximately atmospheric pressure or less, i.e. 80-100 kPa, at room temperature. These gases are inert, and are suitable for protection of the environment. Additionally, if the sealing pressure is within this range, the thermal insulation ability of the gas-filled layer 15 formed in the space layer 14 is improved and the pressure difference between the gas-filled layer 15 and the outside is small, so that the pressure difference with the outside will not cause depressions or bumps to form on the thermal insulator layer 11A. Consequently, the thermal insulator layer can be made into a variety of structures such as flat-walled structures.

Additionally, these gases have larger molecule sizes than the oxygen and nitrogen mostly contained in air, so the permeabilities of the low thermal conductivity gases with respect to the above-mentioned high gas-barrier resins is less than the values for O₂ and N₂. Furthermore, the thermal insulator layer 11A is held in the gap 5 between the inner and outer containers 2 and 3. Thus, the thermal insulation ability of the thermally insulated container 1A can be maintained for a long time by inserting the thermal insulator layer 11A having a gas-filled layer 15 filled with low conductivity gas as a thermal insulator layer into the gap 5, consequently making the formation of a plating film to provide gas-barrier capabilities unnecessary. Additionally, carbon dioxide (κ = 1.45 × 10⁻² W·m⁻¹·K⁻¹; 0 °C) may also be used as a low thermal conductivity gas. Since carbon dioxide is inert and has a larger molecule size than oxygen or nitrogen, it does not present a problem in terms of environmental protection and will not tend to pass through the wall surfaces of the thermal insulator layer. Additionally, these gases are extremely lightweight, thus allowing the thermal insulator layer 11A to be made lighter than when the space layer 14 is filled with a thermal insulator material such as urethane, styrofoam or pearlite, and the thermally insulated container 1A can be made lighter overall.

Additionally, a radiation prevention material 18 should be formed on at least either the outer surface of the inner wall element 12 or the inner surface of the outer wall element 13 of the thermal insulator layer 11A, preferably on the outer surface of the inner wall element 12. As the radiation prevention material 18, one type of metallic foil such as aluminum foil, copper foil or silver foil, or metallic vapor deposition tape can be used.

By forming this radiation prevention material 18 on the thermal insulator layer 11A, the heat loss due to radiative heat transmission can be minimized when thermally insulated container 1A is filled with contents. When a radiation prevention material composed of metals is formed on both the outer surface of the inner wall element 12 and the inner surface of the outer wall element 13, the heat loss due to radiative heat transmission can be further reduced, but the radiation prevention material formed on the outer surface of the inner wall element 12 and the radiation prevention material formed on the inner surface of the outer wall element 13 should preferably be formed so as not to come into contact either at the end portions of the radiation prevention materials or other portions thereof. This reduces the heat loss due to thermal conductance between the radiation prevention materials.

The thickness of the gas-filled layer 15 of the thermal insulator layer 11A should preferably be set to within a range of 1-10 mm. If the thickness is greater than 10 mm, convection currents tend to form in the low thermal conductivity gas and the amount of heat conductance in the thickness direction of the gas-filled layer 15 increases so as to worsen the insulation efficiency; additionally, the gas-filled layer 15 becomes so thick that the proportion of the storage capacity with respect to the outer volume of the thermally insulated container 1A, i.e. the effective volume proportion, is made worse when the thermally insulated container 1A is formed with a thermal insulator layer 11A held in the gap 5 between the inner container 2 and the outer container 3. If the thickness is less than 1 mm, it becomes difficult to form the thermal insulator layer 11A without contact between the inner wall element 12 and the outer wall element 13 or between the outer wall element 13 and the radiation prevention material formed on the outer surface of the inner wall element 12, so that extra care is required for manufacture, thereby inflating manufacturing costs.

As mentioned above, good thermal insulation performance can be obtained by forming a gas-filled layer 15 by filling the space layer 14 with a low thermal conductivity gas.

When providing the thermal insulator layer 11A in the gap 5 between the inner container 2 and the outer container 3, a radiation prevention material composed of a metal can be formed on the outer surface of the inner container 2 or the inner surface of the inner wall element 12 of the thermal insulator layer 11A and/or the inner surface of the outer container 3 or the outer surface of the outer wall element 13 of the thermal insulator layer 11A. In this case, when the radiation prevention material composed of a metal is formed on the outer surface of the inner container 2, the radiation prevention material and the thermal insulator layer 11A should more preferably be formed without contact. Additionally, when the radiation prevention material is formed on the outer surface of the inner container 2 and the inner surface of the outer container 3, they should be formed without contact between the radiation prevention materials and without contact between the radiation prevention materials and the thermal insulator layer 11A. This radiation prevention material should be the same as that formed on the outer surface of the inner wall element 12 and the inner surface of the outer wall element 13.

While this type of radiation prevention material can be provided on only the inner outer surface of the inner wall element 12 or the inner surface of the outer wall element 13, or only between the thermal insulator 11A and the inner container 1 or only between the thermal insulator layer 11A and the outer container 3, the heat loss due to radiative heat transmission can be reduced by means of a multi-layered thermal insulator structure by forming all of these at once. Additionally, when a radiation prevention material composed of a metal is formed on the outer surface of the inner container 2, the radiative heat transfer to the thermal insulator layer 11A and temperature increases of the thermal insulator layer 11A due to conductive heat transmission can be reduced by forming the radiation prevention material so as not to contact the thermal insulator layer 11A, thereby further improving the thermal insulation performance.

Additionally, these radiation prevention materials should preferably be formed in easily detachable fashion by using double-sided tape or the like.

With a thermally insulated container 1A constructed in this way, there is no need to form a plating film to confer gas-barrier properties to the thermal insulator layer 11A, the inner container 2 and the outer container 3, so that the manufacturing costs of the thermally insulated container 1A can be lowered, while making it easy to recover the resins used in the thermal insulator layer 11A, the inner container 2 and the outer container 3. Additionally, the metallic foils used as the radiation prevention materials are also easily recoverable thus making it suitable for recycling of resources.

The inner container 2 and the outer container 3 should be formed by injection molding of a synthetic resin material with low moisture absorbence and high mechanical strength, specifically a synthetic resin material having a moisture absorbence of 50 g/m²/24 hr or less under conditions of temperature 40 °C and relative humidity 90% according to the standards of JIS Z 0208 and a bending elasticity (ASTM D 790) of at least 10,000 kg/cm² and/or an Izod impact strength (notched) (ASTM D 256) of at least 5 kg·cm/cm, chosen from among polypropylene resin, ABS resin, polystyrene, AS, polyethylene, vinyl chloride, polyamide-imide and the like.

The polypropylene resins include copolymers between polypropylene and polyethylene or polybutylene and mixed resins of polypropylene and polyester. The ABS resins include mixed resins of ABS and polyester. Especially with this thermally insulated container 1A, the aperture portion 13b is sealed with a sealing plate 16 by means of adhesive after the space layer 14 of the inner and outer wall elements 12, 13 is filled with low thermal conductivity gas, but adhesive is used in only this part, and there is no need to use adhesive on the inner and outer containers 2, 3. For this reason, it is possible to use adhesion resistant materials such as polypropylene resins which are not conventionally usable, so as to obtain a thermally insulated container 1A with exceptional chemical resistance (the property of not changing even when coming into contact with organic solvents, bleaches or detergents), and the design is not degraded due to the adhesive sealing portion being outwardly visible. Additionally, problems with regard to durability such as heat aging resistance and hot water resistance of the adhesive, as well as problems in connection with external shocks can be reduced.

These resins have low moisture absorbence and high mechanical strength. Therefore, when forming the thermally insulated container 1A by putting the thermal insulator layer 11A in the gap 5 between the inner and outer containers 2, 3 and joining the inner container end portion 2a and the outer container end portion 3a by means of a thermal welding method such as vibration welding, spin welding or hot plate welding, molding the inner container 2 and the outer container 3 from these resins will not cause the mechanical strength to decrease due to moisture absorbence of the thermal insulator layer 11A; and in cases wherein resins with originally low mechanical strength but exceptional gas-barrier capabilities are used, the thermal insulator layer 11A will not absorb moisture and the mechanical strength can be supplemented. Consequently, the gas-barrier capabilities of the thermal insulator layer 11A can be sustained over a long period of time, and the range of selection of high gas-barrier resins for use with the thermal insulator layer 11A can be broadened.

Next, the lid 51 according to the first embodiment will be explained with reference to Fig. 1. A lid 51 having a handle 52b covers the mouth portion 4 of the thermally insulated container 1A. This lid 51 is formed from a synthetic resin, and holds a lid thermal insulator layer 61 having a gas-filled layer 65 formed by filling with low thermal conductivity gas in the gap 55 formed between a top surface wall 52 and a bottom surface wall 53.

The lid thermal insulator layer 61 comprises a top wall element 62 shaped to conform to the bottom surface of the top surface wall 52 and a bottom wall element 63 shaped to conform to the top surface of the bottom surface wall 53. The top wall element 62 and the bottom wall element 63 are formed by injection molding. An aperture portion 63b for filling with low thermal conductivity gas is formed on the upper portion of the top wall element 62. While this aperture portion may be formed on either the top wall element 62 or the bottom wall element 63, it should preferably be formed on the upper portion of the top wall element 62 or the upper portion of the bottom wall element 63, and the case wherein it is formed on the upper portion of the top wall element 62 will be explained here. As resins used for the top wall element 62 and the bottom wall element 63, one type chosen from among polyvinyl alcohol resins, polyacrylonitrile resins, polyamide resins and polyester resins which is a high gas barrier synthetic resin material is used. These resins have exceptional gas barrier properties, so they do not require the formation of a plating film in order to confer gas barrier properties; therefore, the various procedures relating to plating film formation may be skipped, and the lid thermal insulator layer 61 can be manufactured at a low cost.

Furthermore, as the resin used for the top wall element 62 and the bottom wall element 63, synthetic resins with excellent gas-barrier capabilities and high thermal resistance such as to have excellent mechanical strength, such as bending strength or creep resistance, in temperatures of close to 100°C are more preferably used. Examples of these resins include polyvinyl alcohol resins, ethylene-vinyl alcohol, polyacrylonitrile resins, nylon resins, polyester resins, polyethylenenaphthalate; mixed resins containing polypropylene, such as polypropylene and polyethyleneterephthalate, polypropylene and nylon, polypropylene and acrylonitrile, polypropylene and ethylene-vinyl alcohol, and polypropylene and polyvinyl alcohol; mixed resins containing polycarbonate, such as polycarbonate and polyethyleneterephthalate, polycarbonate and nylon, polycarbonate and acrylonitrile, and polycarbonate and ethylene-vinyl alcohol; and mixed resins containing at least two resins selected from the group consisting of polyester resins, polyamide, polyethylenenaphthalate, and ethylene-vinyl alcohol.

By using a synthetic resin material with excellent gas-barrier capabilities and high thermal resistance such as to have excellent mechanical strength in temperatures of close to 100°C for the top wall element 62 and the bottom wall element 63, the lid thermal insulator layer 61 will not deform even if the lid 51 covers thermally insulated container filled with hot water, thereby preventing the lid thermal insulator layer 61 from expanding and giving the lid 51 a bloated appearance.

The top wall element 62 and bottom wall element 63 formed from these resins are joined at their end portions 62a and 63a by means of thermal welding methods such as vibration welding, spin welding and hot plate welding. With these welding methods, the surfaces of the top wall element end portion 62a and the bottom wall element end portion 63a can be welded together and the joint portion between the end portions 62a and 63a of the top and bottom wall elements can be held airtight, thereby increasing the joint strength. The space layer 64 formed between the walls of the lid double-walled element obtained by joining the top and bottom wall elements 62 and 63 is filled with a low thermal conductivity gas through the aperture portion 63b. After the filling, the aperture portion 63b is sealed by means of a sealing plate 66 using a cyanoacrylate or acetonitrile adhesive, to result in a lid thermal insulator layer 61 with the space layer 64 as a gas-filled layer 65 which is a thermal insulator.

As the low thermal conductivity gas filled into the space layer 64 of the lid thermal insulator layer 61, at least one type of gas chosen from among xenon, krypton and argon should be used, with a filling pressure of about atmospheric pressure or less at room temperature. Carbon dioxide may also be used as this low thermal conductivity gas.

Additionally, the thickness of the gas-filled layer 65 is preferably set to 1-10 mm. If this thickness is greater than 10 mm, convection currents are prone to form in the low thermal conductivity gas, so that the amount of heat transmission in the thickness direction of the gas-filled layer 65 increases and the thermal insulation efficiency is made worse. If this thickness is less than 1 mm, it becomes difficult to form the lid thermal insulator layer 61 while avoiding contact between the top wall element 62 and the bottom wall element 63, so that care is required for manufacture and the manufacturing costs rise.

By filling the space layer 64 with low thermal conductivity gas, it is possible to obtain good thermal insulation effects even when the gas-filled layer 65 is made thin, so the range of thickness can be set to 1-10 mm.

Additionally, a radiation prevention material 67 composed of a metal should preferably formed on at least one of either the top surface of the bottom wall element 63 or the bottom surface of the top wall element 62, preferably the top surface of the bottom wall element 63. As this radiation prevention material 67, one type chosen from among metallic vapor deposition tape or metallic foil such as aluminum foil, copper foil, silver foil or the like is used. By forming this radiation prevention material 67 on the lid thermal insulator layer 61, the heat loss due to radiative heat transmission from the lid 51 when contents are put into the thermally insulated container 1A attached with the lid 51 can be reduced. If the radiation prevention materials composed of a metal are formed on both the top surface of the bottom wall element 63 and the bottom surface of the top wall element 62, the heat loss due to radiative heat transmission can be further reduced, but the radiation prevention material formed on the top surface of the bottom wall element 63 and the radiation prevention material formed on the bottom surface of the top wall element 62 should preferably be formed without contact between the radiation prevention materials at their end portions or at other parts. As a result, heat loss due to heat conductance between the radiation prevention materials can be reduced.

When maintaining a lid thermal insulator layer 61 in the gap 55 between the top surface wall 52 and the bottom surface wall 53, radiation prevention materials composed of metal can be formed on the top surface of the bottom surface wall 53 or the bottom surface of the bottom wall element 63 of the lid thermal insulator layer 61, and/or the bottom surface of the top surface wall 52 or the top surface of the top wall element 62 of the lid thermal insulator layer 61. In this case, the heat loss can be further reduced by forming the radiation prevention materials without mutual contact. Additionally, when forming the radiation prevention materials on the bottom surface of the top surface wall 52 or the top surface of the bottom surface wall 53, the radiation prevention materials should preferably be formed without contacting the lid thermal insulator layer 61.

As these radiation prevention materials, the same types as the radiation prevention materials formed on the bottom surface of the top wall element 62 and the top surface of the bottom wall element 63 are used. By forming the radiation prevention materials composed on metals on the bottom surface of the top surface wall 52 and the top surface of the bottom surface wall 53, the heat loss due to radiative heat transmission can be further reduced in comparison to the case wherein radiation prevention materials composed of metals are formed on only the lid thermal insulator layer 61.

Additionally, these radiation prevention materials should preferably be formed so as to be capable of being easily detached by using double-sided tape or the like.

In this way, the lid 51 does not require the formation of a plating film to confer gas barrier properties to the top surface wall 52 and the bottom surface wall 53, so that the manufacturing costs for the lid 51 can be reduced. Additionally, the resins used in the top surface wall 52 and the bottom surface wall 53 of the lid thermal insulator layer and the metallic foils used in the radiation prevention materials are easily recovered, making it suitable for recycling of resources.

The top surface wall 52 and the bottom surface wall 53 are formed by means of injection molding from one type chosen from among polypropylene resins, ABS resins, polystyrene, AS, polyethylene, vinyl chloride, polyamide-imides and the like which are synthetic resin materials with low moisture absorbence and high mechanical strength. Since these resins have low moisture absorbence and exceptional mechanical strength, they confer strength to the lid 51 and do not allow the high gas barrier resins used to form the lid thermal insulator layer 61 to absorb moisture, so as to allow the gas barrier properties to be maintained for a long period of time.

Additionally, when the lid 51 is attached to the thermally insulated container 1A, the outer surface of the circumferential wall portion 54 of the lid 51 is formed so as to contact the mouth circumferential wall portion 2b of the thermally insulated container 1A and block heat transmission from this contacting portion, so as to increase the ability to maintain warmth of the contents put into the thermally insulated container 1A.

By covering the mouth portion 4 of the thermally insulated container 1A with the lid 51 formed in this way, contents put into the thermally insulated container 1A can be kept warm over a long period of time.

With the thermally insulated container and lid according to the first embodiment as described above, the thermal insulator layer is filled with a low thermal conductivity gas and sealed by double synthetic resin walls, so as to allow the gas barrier properties of the thermally insulated container and lid to be maintained for a long time, thereby allowing the thermal insulation capabilities to be kept high.

Additionally, by using a high gas barrier resin for the thermal insulator layer and using a low moisture absorbence and high mechanical strength resin for the inner and outer containers or the top and bottom surface walls, the high gas barrier resin of the thermal insulator layer which tends to mechanically weaken and have reduced gas barrier properties when absorbing moisture can be protected and kept from absorbing moisture, thus allowing the thermal insulation capabilities to be maintained over a long period of time.

Additionally, no plating film is formed, so that the manufacturing costs can be reduced, while making it easier to recover the synthetic resins used to form the thermally insulated container or lid and the metallic foils used to reduce radiative heat transmission, thus making the present embodiment suitable for recycling of resources. Furthermore, the thermal insulation layer of the thermal insulator can be made thinner by filling the thermal insulation layer with a low thermal conductivity gas, as a result of which the thermally insulated container and lid can be made thinner.

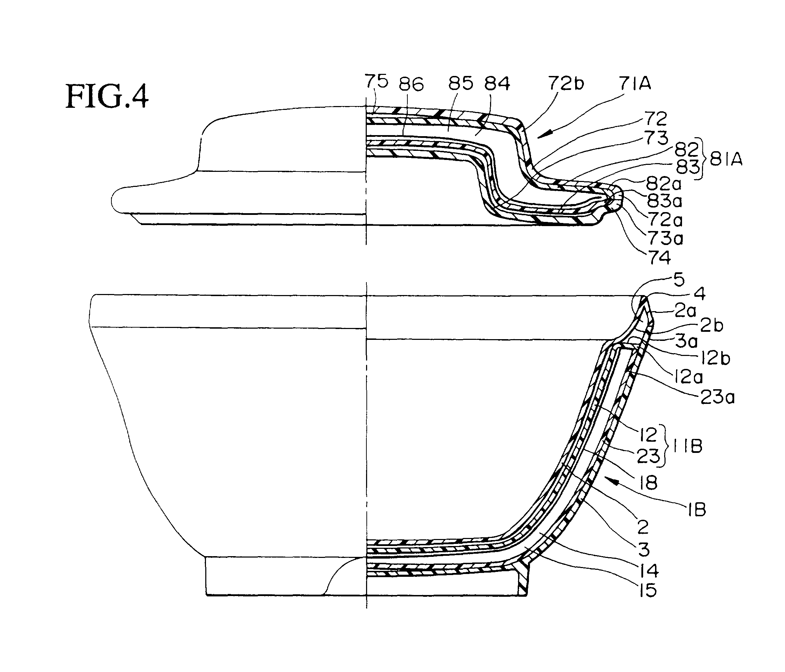

Figs. 4 through 7 show a second embodiment of the thermally insulated container and lid of the present invention.

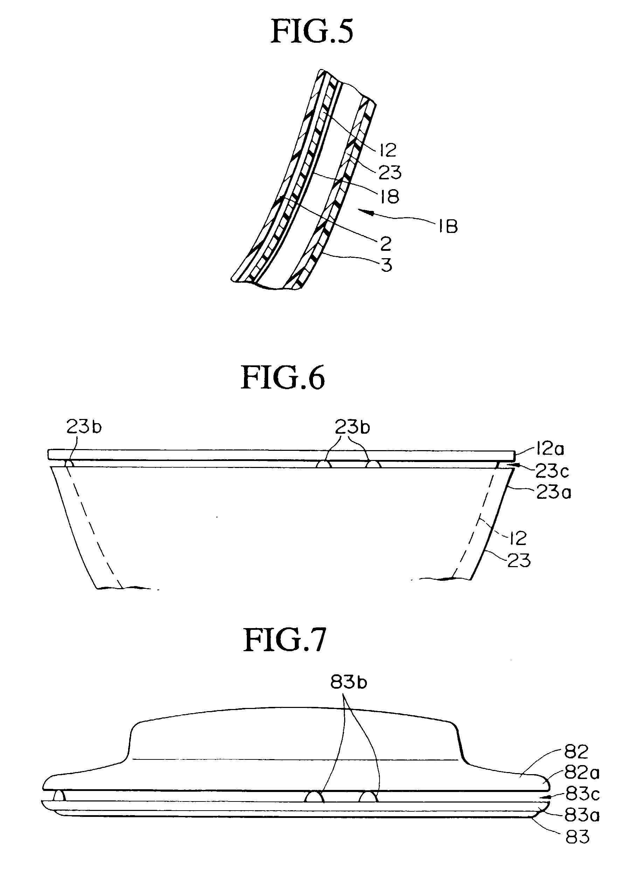

The thermally insulated container 1B shown in Figs. 4 and 5 is formed by putting a thermal insulator layer 11B having a space layer 14 filled with a low thermal conductivity gas inside a gap 5 formed between an inner container 2 and an outer container 3.

The thermal insulator layer 11B comprises an inner wall element 12 and an outer wall element 23; the inner wall element 12 and outer wall element 23 are formed by injection molding. The difference between this thermal insulator layer 11B and the thermal insulator layer 11A used in the first embodiment is that the thermal insulator layer 11B does not have an aperture portion for filling with low thermal conductivity gas.

As a low thermal conductivity gas for filling the space layer 14 in the thermal insulator layer 11B, at least one type of gas chosen from among xenon, krypton and argon is used, and these gases should preferably be used either singly or as a mixed gas of two or more types for filling at a filling pressure of approximately atmospheric pressure at room temperature. Additionally, carbon dioxide gas may also be used as the low thermal conductivity gas. The thickness of the gas-filled layer 65 formed by filling the low thermal conductivity gas should preferably be set to within the range of 1-10 mm.

By filling the space layer 14 with a low thermal conductivity gas as described above, the thickness of the gas-filled layer can be set to within the above-mentioned range.

As the resin used for the inner wall element 12 and the outer wall element 23, one type chosen from among polyvinyl alcohol resins, polyacrylonitrile resins, polyamide resins and polyester resins which is a high gas barrier synthetic resin material is used. Since these resins have exceptional gas barrier properties, they do not require the formation of a plating film to confer gas barrier properties.

Furthermore, as indicated for the first embodiment, synthetic resins with excellent gas-barrier capabilities and high thermal resistance such as to have excellent mechanical strength, such as bending strength or creep resistance, in temperatures of close to 100°C are more preferably used for the inner wall element 12 and the outer wall element 23. By using these resins for the inner wall element 12 and the outer wall element 23, the thermal insulator layer 11B will not deform even if the thermally insulated container 1B is filled with hot water, thereby preventing the thermal insulator layer 11B from expanding and giving the thermal insulated container 1B a bloated appearance.

Radiation prevention materials 18 composed of one type of metal chosen from among aluminum foil, copper foil, silver foil or metallic vapor deposition tape are formed on the outer surface of the inner container 2 or the inner surface of the inner wall element 12 of the thermal insulator layer 11B, and/or the inner surface of the outer container 3 or the outer surface of the outer wall element 23 of the thermal insulator layer 11B. In this case, the heat loss can be further reduced by forming radiation prevention materials in a plurality of locations chosen from the above so as not to come into mutual contact. Additionally, when radiation prevention materials are formed on the outer surface of the inner container 2 or the inner surface of the outer container 3, these radiation prevention materials should be formed such as not to contact the thermal insulator layer 11B.

When producing a thermal insulator layer 11B as described above, an inner wall element 12 having a flange-shaped inner wall element end portion 12a at the mouth portion, and an outer wall element 23 having projections 23b for supporting the inner wall element end portion 12a at the end portion thereof as shown in Fig. 6 are made, and the inner wall element 12 is placed inside the outer wall element 23. At this time, a gap 23c is formed between the outer wall element end portion 23a and the inner wall element end portion 12a because the inner wall element 12 is supported by the projections 23b at the end portion 12a. Then, the inner and outer wall elements are joined by vibration welding using a vibration welder (not shown in the drawings) as described below.

First, the inner and outer wall elements 12 and 23 are accommodated within the sealed space formed between the upper and lower jigs (the lower jig is capable of holding the outer surface of the outer wall element over approximately the entire surface, and the upper jig is capable of supporting the inner surface of the inner wall element over approximately the entire surface) of a vibration welder. Next, after evacuating the sealed space containing the inner wall element 12 and the outer wall element 23, a low thermal conductivity gas is entered into this sealed space, and the gas is passed through the gap 23c between the inner and outer wall element end portions so as to go between the inner and outer wall elements. Subsequently, a vibration of approximately 100 Hz is applied to the inner wall element 12 and the outer wall element 23 through the upper and lower jigs. As a result, the projections which form the joint portions between the inner and outer wall elements are melted, and the gap 23c between the inner and outer wall element end portions is sealed so as to fuse the end portions of the inner and outer wall elements together in airtight fashion, thereby obtaining the thermal insulator layer 11B.

Next, this thermal insulator layer 11B is housed in the gap 5 formed between the inner container 2 and the outer container 3, then the inner container end portion 2a and the outer container end portion 3a are joined by means of a thermal welding method such as vibration welding, spin welding or hot plate welding so as to obtain the thermally insulated container 1B.

Next, the lid 71A according to the second embodiment will be explained. A handle 72b is formed on this lid 71A.

The difference between the lid thermal insulator layer 81A in the lid 71A of this embodiment and the lid thermal insulator layer 61 used in the first embodiment is that the lid thermal insulator layer 81A does not have an aperture portion for filling with low thermal conductivity gas.

As the resin used for the top wall element 82 and the bottom wall element 83 of the lid thermal insulator layer 81A, one type chosen from among polyvinyl alcohol resin, polyacrylonitrile resin, polyamide resin and polyester resin which is a high gas barrier synthetic resin material is used. These resins have exceptional gas barrier properties, so as not to require the formation of plating films to confer gas barrier properties.

Furthermore, as indicated for the first embodiment, synthetic resins with excellent gas-barrier capabilities and high thermal resistance such as to have excellent mechanical strength, such as bending strength or creep resistance, in temperatures of close to 100°C are more preferably used for the top wall element 82 and the bottom wall element 83. By using these resins for the top wall element 82 and the bottom wall element 83, the lid thermal insulator layer 81A will not deform even if the lid 71A covers thermally insulated container filled with hot water, thereby preventing the lid thermal insulator layer 81A from expanding and giving the lid 71A a bloated appearance.

The space layer 84 formed between the top wall element 82 and the bottom wall element 83 is filled with a low thermal conductivity gas, and the respective end portions 82a and 83a are thermally welded together by means of vibration welding so as to obtain a lid thermal insulator layer 81A.

As the low thermal conductivity gas for filling in the space layer 84 of the lid thermal insulator layer 81A, at least one type of gas chosen from among xenon, krypton and argon is used. These gases may be used singly or as a mixed gas of two or more types, and should preferably be filled with a filling pressure of approximately atmospheric pressure at room temperature. Additionally, carbon dioxide gas may also be used as the low thermal conductivity gas. The thickness of the gas-filled layer formed by filling the space layer 84 with low thermal conductivity gas is preferably set to 1-10 mm.

By filling the space layer 84 with low thermal conductivity gas as described above, the thickness of the gas-filled layer 85 can be set to the above range.

Additionally, when forming the lid thermal insulator layer 81A, a radiation prevention material 86 composed of one type of metal chosen from among aluminum foil, copper foil, silver foil, metallic vapor deposition tape or the like should preferably be formed on at least one of either the bottom surface of the top wall element 82 or the top surface of the bottom wall element 83, preferably the top surface of the bottom wall element 83.

When putting the lid thermal insulator layer 81A in the gap 75 between the top surface wall 72 and the bottom surface wall 73, a radiation prevention material composed of a metal can be formed on the top surface of the bottom surface wall 73 or the bottom surface of the bottom wall element 83 of the lid thermal insulator layer 81A and/or the bottom surface of the top surface wall 72 or the top surface of the top wall element 82 of the lid thermal insulator layer 81A. In this case, the heat loss can be further reduced by forming the radiation prevention materials at a plurality of the above locations so as not to make mutual contact. Additionally, when forming the radiation prevention materials on the bottom surface of the top surface wall 72 or the top surface of the bottom surface wall 73, the radiation prevention materials should be formed so as not to contact the lid thermal insulator layer 81A.

Additionally, the lid thermal insulator layer 81A will not rock because the top and bottom wall element end portions 82a and 83a are supported by the inner surface of the circumferential wall portion 74 of the lid 71A.

The top surface wall 72 and the bottom surface wall 73 are formed by injection molding one type of material chosen from among polypropylene resin, ABS resin, polystyrene, AS, polyethylene, vinyl chloride, polyamide-imide or the like which is a synthetic resin material with low moisture absorbence and high mechanical strength. The lid thermal insulator layer 81A is placed within the gap 75 formed between these top and bottom surface walls 72 and 73 formed from resins with high mechanical strength, and the top and bottom surface end portions 72a and 73a are joined together by a thermal welding method such as vibration welding, spin welding or hot plate welding, so as to obtain the lid 71A. With this lid 71A, the gas barrier properties of the high gas barrier resin used to form the lid thermal insulator layer 81A can be maintained for a long period of time.

When manufacturing the lid thermal insulator layer 81A as described above, a top wall element 82 and a bottom wall element 83 having projections 83b for supporting the top wall element 82 on the end portion are made, and the top wall element 82 is placed on top of the bottom wall element 83. At this time, the top wall element 82 is supported by the projections 83b at the end portion, so that a gap 83c is formed between the top wall element end portion 82a and the bottom wall element end portion 83a. Next, the top and bottom wall elements are joined by vibration welding using a vibration welder (not shown in the drawings). First, the top and bottom wall elements 82 and 83 are accommodated in a sealed space formed between the upper and lower jigs (the lower jig is capable of holding almost the entirety of the bottom surface of the bottom wall element, and the upper jig is capable of supporting almost the entirety of the top surface of the top wall element) of the vibration welder. Next, the sealed space containing the top wall element 82 and the bottom wall element 83 is evacuated, after which the sealed space is filled with a low thermal conductivity gas so as to pass the gas through the gap 83c between the top wall element 82 and the bottom wall element 83 and enter the gas between the top and bottom wall elements. Next, a vibration of approximately 100 Hz is applied to the top wall element 82 and the bottom wall element 83 through the upper and lower jigs. As a result, the projections 83b which form the joint portion between the top and bottom wall elements melt, so as to seal the gap 83c between the top and bottom wall elements, thereby fusing the top and bottom wall elements together at the end portions to join them in an airtight manner.

With the thermally insulated container and lid of the second embodiment as described above, as indicated for the first embodiment, the gas barrier properties of the thermally insulated container and lid can be maintained for a long period of time, so as to allow good thermal insulation capabilities to be maintained for a long time. Additionally, since no plating film is formed, the manufacturing costs can be reduced and the synthetic resins and metallic foil are easily recovered. Furthermore, the container and the lid can be made thin.

Moreover, the thermally insulated container and lid of this embodiment do not require an aperture portion and sealing plate as do the thermally insulated container and lid of the first embodiment. Consequently, no procedures are necessary for sealing the aperture portion with a sealing plate, so as to simplify manufacture and offer an advantage in terms of manufacturing costs.

Additionally, with the manufacturing method for the thermally insulated container and lid as described above, projections are formed on the outer wall element 23 and the bottom wall element 83 so as to form gaps between the inner wall element end portion 12a and the outer wall element end portion 23a, and the top wall element end portion 82a and the bottom wall element end portion 83a, thereby making it easier to enter low thermal conductivity gas between the inner and outer wall elements and between the top and bottom wall elements after evacuation.

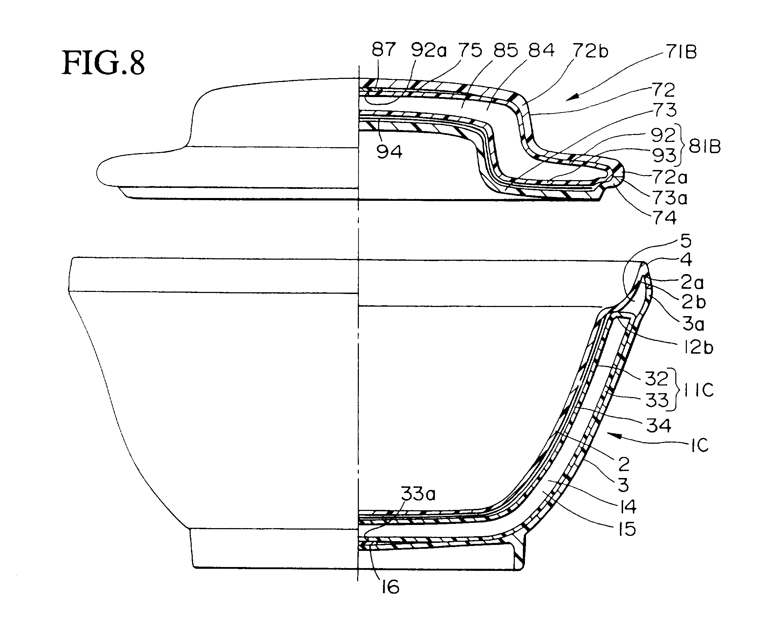

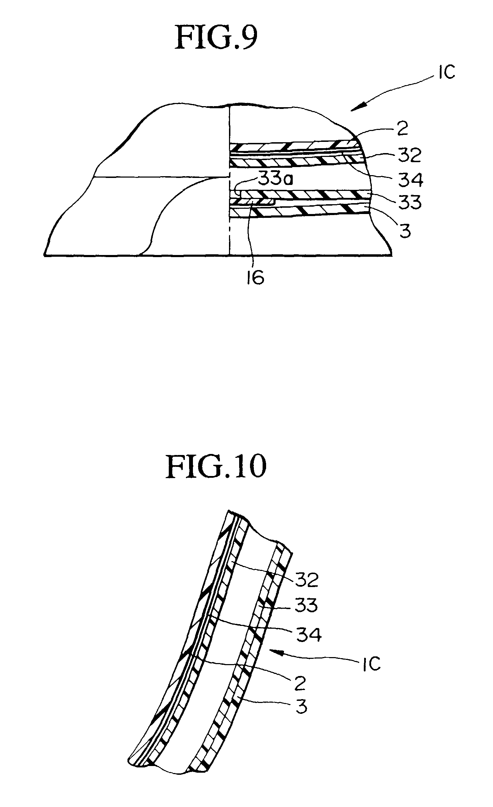

Figs. 8-10 show a third embodiment of the thermally insulated container and lid according to the present invention. The thermally insulated container 1C holds a thermal insulator layer 11C having a space layer 14 filled with low thermal conductivity gas in a gap 5 formed by the inner container 2 and the outer container 3.

The double-walled insulator which forms the thermal insulator layer 11C is blow-molded as a single unit so as to have an aperture portion 33a in the bottom portion of the outer wall 33 of the double-walled insulator. By molding the double-walled insulator as a single unit in this way, the steps of joining the inner wall element 12 and outer wall element 13, 23 by thermal welding methods such as vibration welding, spin welding and hot plate welding as described for the first and second embodiments can be skipped, so as to lower the manufacturing costs. The aperture portion may also be provided on the inner wall 32 of the double-walled insulator.

As the resin used to form the thermal insulator layer 11C, one type chosen from among polyvinyl alcohol resins, polyacrylonitrile resins, polyamide resins and polyester resins which is a high gas barrier synthetic resin material as used in the first and second embodiments can be used.

Furthermore, as indicated for the first and second embodiments, synthetic resins with excellent gas-barrier capabilities and high thermal resistance such as to have excellent mechanical strength, such as bending strength or creep resistance, in temperatures of close to 100°C are more preferably used for the thermal insulator layer 11C. By using these resins for the thermal insulator layer 11C, the thermal insulator layer 11C will not deform even if the thermally insulated container 1C is filled with hot water, thereby preventing the thermal insulator layer 11C from expanding and giving the thermal insulated container 1C a bloated appearance.

The space layer 14 is filled with a low thermal conductivity gas, preferably at least one type chosen from among xenon, krypton and argon used singly or as a mixed gas of two or more types, with a filling pressure of approximately atmospheric pressure at room temperature. After being filled, the aperture portion 33a is covered by the sealing plate 16, and this sealing plate 16 is attached with a cyanoacrylate adhesive. It is also possible to use carbon dioxide as a low thermal conductivity gas. The thickness of the gas-filled layer 15 of the thermal insulator layer 11C is set to within the range of 1-10 mm.

When putting the thermal insulator layer 11C into the gap 5 between the inner container 2 and outer container 3, a radiation prevention material composed of a metal can be formed on the outer surface of the inner container 2 or the inner surface of the inner wall 32 of the thermal insulator layer 11C, and/or the inner surface of the outer container 3 or the outer surface of the outer wall 33 of the thermal insulator layer 11C. Preferably, a radiation prevention material 34 composed of one type of metal chosen from among aluminum foil, copper foil, silver foil or metallic vapor deposition tape should be formed on the outer surface of the inner container 2. As a result, the heat loss due to radiative heat transmission can be reduced when the thermally insulated container 1C is formed and contents placed therein. In this case, the heat loss can be further reduced by forming radiation prevention materials at a plurality of locations among the above-mentioned locations such as not to come into mutual contact. Additionally, when forming the radiation prevention material on the outer surface of the inner container 2 or the inner surface of the outer container 3, the radiation prevention material should be formed so as not to contact the thermal insulator layer 11C.

The types of resins used to form the inner container 2 and the outer container 3 are the same as in the first and second embodiments. Additionally, the thermal insulator layer 11C is placed within the gap 5 between the inner and outer containers 2 and 3 as with the first and second embodiments.

Next, the hat-shaped lid 71B used in the third embodiment will be explained with reference to Fig. 8. This lid 71B is formed from synthetic resin, and holds a hat-shaped lid thermal insulator layer 81B having a gas-filled layer 85 filled with a low thermal conductivity gas in a gap 75 formed between a top surface wall 72 and a bottom surface wall 73. Additionally, a handle 72b is formed in the lid 71B.

The lid double-walled thermal insulator forming the lid thermal insulator layer 81B is blow-molded as a single unit so as to have an aperture portion 92a on the upper portion of the top wall 92 of the lid double-walled insulator. By molding the lid double-walled insulator as a single unit in this way, the steps of joining the top wall element 62, 82 and bottom wall element 63, 83 by thermal welding methods such as vibration welding, spin welding and hot plate welding as described for the first and second embodiments can be skipped, so as to lower the manufacturing costs. The aperture portion may also be provided on the bottom wall 93 of the lid double-walled insulator.

As the resin used to form the lid thermal insulator layer 81B, one type chosen from among polyvinyl alcohol resins, polyacrylonitrile resins, polyamide resins and polyester resins which is a high gas barrier synthetic resin material as used in the first and second embodiments can be used.

Furthermore, as indicated for the first and second embodiments, synthetic resins with excellent gas-barrier capabilities and high thermal resistance such as to have excellent mechanical strength, such as bending strength or creep resistance, in temperatures of close to 100°C are more preferably used for the lid thermal insulator layer 81B. By using these resins for the lid thermal insulator layer 81B, the lid thermal insulator layer 81B will not deform even if the lid 71B covers thermally insulated container filled with hot water, thereby preventing the lid thermal insulator layer 81B from expanding and giving the lid 71B a bloated appearance.

The space layer 84 is filled through the aperture portion 92a with a low thermal conductivity gas, preferably at least one type chosen from among xenon, krypton and argon used singly or as a mixed gas of two or more types, with a filling pressure of approximately atmospheric pressure at room temperature. At this time, the aperture portion 92a is covered by the sealing plate 87, and this sealing plate 87 is affixed with a cyanoacrylate adhesive. It is also possible to use carbon dioxide as a low thermal conductivity gas. The thickness of the gas-filled layer 85 of the thermal insulator layer 11C is set to within the range of 1-10 mm.

By filling with a low thermal conductivity gas as mentioned above, the thickness of the gas-filled layer 85 of the lid thermal insulator layer 81B can be set to within the range of 1-10 mm.

When putting the lid thermal insulator layer 81B into the gap 75 between the top surface wall 72 and bottom surface wall 73, a radiation prevention material composed of a metal can be formed on the upper surface of the bottom surface wall 73 or the bottom surface of the bottom wall 93 of the lid thermal insulator layer 81B, and/or the bottom surface of the top surface wall 72 or the top surface of the top wall 92 of the lid thermal insulator layer 81B. Preferably, a radiation prevention material 94 composed of one type of metal chosen from among aluminum foil, copper foil, silver foil or metallic vapor deposition tape should be formed on the top surface of the bottom surface wall 73. As a result, the heat loss due to radiative heat transmission from the lid 71B can be reduced when the lid 71B is attached to the thermally insulated container. In this case, the heat loss can be further reduced by forming radiation prevention materials at a plurality of locations among the above-mentioned locations such as not to come into mutual contact. Additionally, when forming the radiation prevention material on the bottom surface of the top surface wall 72 or the top surface of the bottom surface wall 73, the radiation prevention material should be formed so as not to contact the lid thermal insulator layer 81B.

The types of resins used to form the top surface wall 72 and the bottom surface wall 73 are the same as in the first and second embodiments. Additionally, the lid 71B is formed by placing the lid thermal insulator layer 81B inside the gap 75 between the top and bottom surface walls 72 and 73, then joining the end portions 72a and 73a of the top and bottom surface walls together by means of a thermal welding method such as vibration welding, spin welding or hot plate welding, as with the first and second embodiments.

With the thermally insulated container and lid according to the third embodiment as described above, the gas barrier properties of the thermally insulated container and lid can be maintained for a long period of time, thereby allowing the thermal insulation capabilities to be maintained at a high level for a long time, as with the first and second embodiments. Additionally, no plating film is formed, so that the manufacturing costs can be reduced and the synthetic resin and metallic foils are easily recovered. Additionally, the thermal insulator layer can be made thin.

Furthermore, the thermally insulated container and lid of the present embodiment are formed by double-walled bodies composing thermal insulator layers molded as single units, so that the steps for joining the inner wall element and outer wall element, or the top wall element and bottom wall element by means of thermal welding methods such as vibration welding, spin welding or hot plate welding as described in the first and second embodiments can be skipped, thereby simplifying manufacture and reducing manufacturing costs.

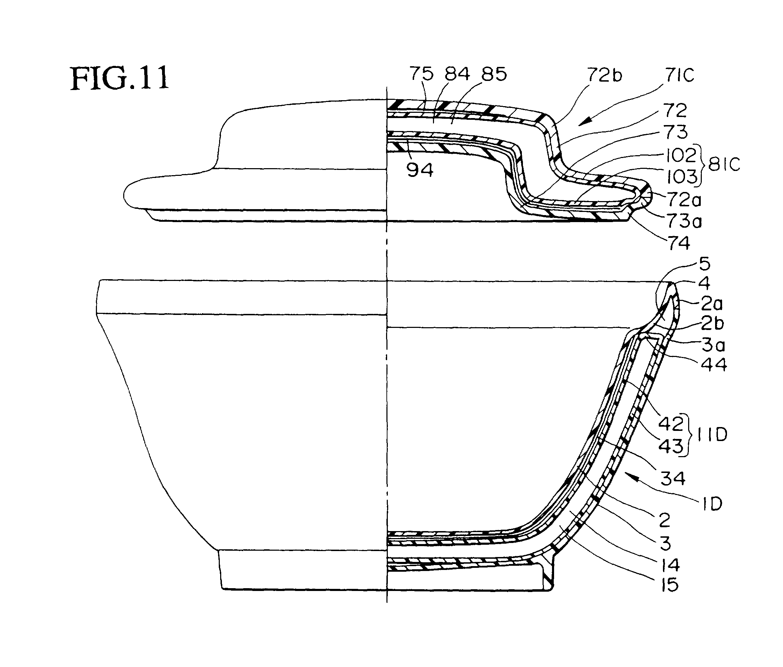

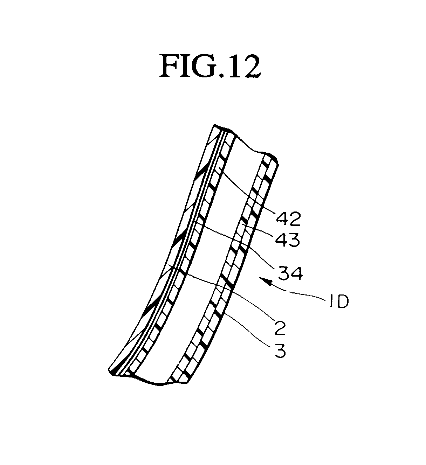

Figs. 11 and 12 show a fourth embodiment of the thermally insulated container and lid of the present invention. The thermally insulated container 1D is formed by placing a thermal insulator layer 11D having a space layer 14 filled with a low thermal conductivity gas within a gap 5 formed between the inner container 2 and the outer container 3.

The thermal insulator layer 11D does not have an aperture portion 33a as described for the third embodiment. This thermal insulator layer 11D is a double-walled thermal insulator with a double-walled structure which comprises an inner wall 42, an outer wall 43 and a gas-filled layer 15, and is formed by preparing a male mold for forming the inner wall 42 and a female mold for forming the outer wall 43 (not shown in the drawings) of the thermal insulator layer 11D, forming parisons within these molds by tubularly extruding a melted synthetic resin of one type chosen from among polyvinyl alcohol resins, polyacrylonitrile resins, polyamide resins and polyester resins which is a high gas barrier synthetic resin, blowing low thermal conductivity gas into these parisons, and cooling so as to seal the low thermal conductivity gas within the space between the male and female molds.

Since the open mouth portion 44 of this thermal insulator 11D contacts a portion of the mouth circumferential wall portion 2b of the inner container 2, it will not rattle.

The low thermal conductivity gas for the blow gas is at least one type of gas chosen from among xenon, krypton and argon, used either singly or as a mixed gas of two or more types. Additionally, carbon dioxide may also be used as the blow gas. By molding the thermal insulator layer 11D as a single unit in this manner, the steps for joining the inner and outer wall elements 12, 13 and 23 by means of thermal welding methods such as vibration welding, spin welding and hot plate welding as described for the first and second embodiments may be skipped. Additionally, since it lacks an aperture portion 13b, 33a as described for the first through third embodiments, the steps of sealing the aperture portion with a sealing plate after filling with low thermal conductivity gas can be skipped, thereby simplifying manufacture and reducing manufacturing costs.

As the resin used to form the thermal insulator layer 11D, one type chosen from among the polyvinyl alcohol resins, polyacrylonitrile resins, polyamide resins and polyester resins used in the first through third embodiments is used. The thickness of the thermal insulation layer 15 of the thermal insulator layer 11D is preferably set to within the range of 1-10 mm.

Furthermore, as indicated for the first through third embodiments, synthetic resins with excellent gas-barrier capabilities and high thermal resistance such as to have excellent mechanical strength, such as bending strength or creep resistance, in temperatures of close to 100°C are more preferably used for the thermal insulator layer 11D. By using these resins for the thermal insulator layer 11D, the thermal insulator layer 11D will not deform even if the thermally insulated container 1D is filled with hot water, thereby preventing the thermal insulator layer 11D from expanding and giving the thermal insulated container 1D a bloated appearance.

Additionally, when placing the thermal insulator layer 11D in the gap 5 between the inner container 2 and outer container 3, a radiation prevention material composed of a metal should be formed on the outer surface of the inner container 2 or the inner surface of the inner wall 42 of the thermal insulator layer 11D, and/or the inner surface of the outer container 3 or the outer surface of the outer wall 43 of the thermal insulator layer 11D. Preferably, a radiation prevention material 34 composed of one type of metal chosen from among aluminum foil, copper foil, silver foil and metallic vapor deposition tape should be formed on the outer surface of the inner container 2. In this case, the heat loss can be further reduced by forming the radiation prevention material in a plurality of the above-mentioned locations so as not to come into mutual contact. Additionally, when forming the radiation prevention material on the outer surface of the inner container 2 or the inner surface of the outer container 3, the radiation prevention material should be formed so as not to contact the thermal insulator layer 11D.

The inner container 2 and the outer container 3 are formed using the same resins as the resins used in the first through third embodiments. Additionally, as with the first through third embodiments, the thermally insulated container 1D is formed by placing the thermal insulator layer 11D inside the gasp 5 between the inner and outer containers 2 and 3, then joining the end portions 2a and 3a of the inner and outer containers by means of a thermal welding method such as vibration welding, spin welding or hot plate welding.

Next, the hat-shaped lid 71C used in the fourth embodiment will be explained with reference to Fig. 11. This lid 71C is formed from a synthetic resin, and has a hat-shaped lid thermal insulator layer 81C with a gas-filled layer 85 filled with low thermal conductivity gas in the gap 75 formed between the top surface wall 72 and the bottom surface wall 73. A handle 72b is formed on the lid 71C.

The lid thermal insulator 81C does not have an aperture portion as in the third embodiment. This lid thermal insulator layer 81C is a double-walled thermal insulator for the lid with a double-walled structure which comprises a bottom wall 103, a top wall 102 and a gas-filled layer 85, and is formed by preparing a male mold for forming the bottom wall 103 and a female mold for forming the top wall 102 (not shown in the drawings) of the lid thermal insulator layer 81C, forming parisons within these molds by tubularly extruding a melted synthetic resin of one type chosen from among polyvinyl alcohol resins, polyacrylonitrile resins, polyamide resins and polyester resins which is a high gas barrier synthetic resin, blowing low thermal conductivity gas into these parisons, and cooling so as to seal the low thermal conductivity gas within the space between the male and female molds.

Furthermore, as indicated for the first through third embodiments, synthetic resins with excellent gas-barrier capabilities and high thermal resistance such as to have excellent mechanical strength, such as bending strength or creep resistance, in temperatures of close to 100°C are more preferably used for the lid thermal insulator layer 81C. By using these resins for the lid thermal insulator layer 81C, the lid thermal insulator layer 81C will not deform even if the lid 71C covers thermally insulated container filled with hot water, thereby preventing the lid thermal insulator layer 81C from expanding and giving the lid 71C a bloated appearance.

The low thermal conductivity gas for the blow gas is at least one type of gas chosen from among xenon, krypton and argon, used either singly or as a mixed gas of two or more types. Additionally, carbon dioxide may also be used as the blow gas.

By forming the lid thermal insulator layer 81C as a single unit in this manner, the steps for joining the top and bottom wall elements by means of thermal welding methods such as vibration welding, spin welding or hot plate welding as described for the first and second embodiments can be skipped. Additionally, the lid thermal insulator layer 81C does not have an aperture portion 63b, 92a as described for the first through third embodiments, so that the aperture portion and sealing plate are unnecessary, making it possible to skip the steps of filling with low thermal conductivity gas and sealing the aperture portion with the sealing plate, consequently reducing manufacturing costs.

The thickness of the gas-filled layer 85 between the walls of the lid thermal insulator 81C should preferably be set to within the range of 1-10 mm.

When the lid thermal insulator 81C is placed within the gap 75 between the top surface wall 72 and the bottom surface wall 73, a radiation prevention material composed of a metal should be formed on the top surface of the bottom surface wall 73 or the bottom surface of the bottom wall 103 of the lid thermal insulator 81C, and/or the bottom surface of the top surface wall 72 or the top surface of the top wall 102 of the lid thermal insulator layer 81C. Preferably, a radiation prevention material 94 composed of one type of metal chosen from among aluminum foil, copper foil, silver foil or metallic vapor deposition tape should be formed on the top surface of the bottom surface wall 73. In this case, the heat loss can be further reduced by forming the radiation prevention material in a plurality of the above-mentioned locations so as not to come into mutual contact. Additionally, when forming the radiation prevention material on the bottom surface of the top surface wall 72 or the top surface of the bottom surface wall 73, the radiation prevention material 81C should be kept from contacting the lid thermal insulator 81C.

The top surface wall 72 and the bottom surface wall 73 are formed from the same resins as the resins used for the top and bottom surface walls in the first through third embodiments. Additionally, as with the first through third embodiments, the lid 71C is formed by placing the lid thermal insulator layer 81C within the gap 75 between the top and bottom surface walls 72 and 73, then joining the end portions 72a and 73a of the top and bottom surface walls by means of vibration welding or the like.

With the thermally insulated container and lid according to the fourth embodiment as explained above, the gas barrier properties of the thermally insulated container and lid can be maintained for a long period of time as described previously for the first embodiment, thereby allowing the thermal insulation capabilities to be maintained at a high level for a long time. Additionally, since no plating film is formed, the manufacturing costs can be reduced while the synthetic resins and metallic foils are easily recovered. Additionally, the thermal insulation layer can be made thin.

Furthermore, since the double-walled body forming the thermal insulator layer in the thermally insulated container and lid of the present embodiment are formed as single units, the steps of joining together the inner wall element and outer wall element, or the top wall element and bottom wall element, by means of a thermal welding method such as vibration welding, spin welding or hot plate welding can be skipped. Additionally, low thermal conductivity gas is directly blown in as a blow gas, so that there is no need for any procedures to seal the aperture portion with the sealing plate. Consequently, the manufacturing process is simplified and an advantage is offered in terms of manufacturing costs.

### EXAMPLES

A first example of the present invention will be explained with reference to Figs. 1-3. First, in order to produce a thermally insulated container 1A, an inner wall element 12 and an outer wall element 13 were injection molded using EVOH (trade name: EVAL, Kuraray Chemical Co., Ltd.) as a polyvinyl alcohol resin such as to be 1 mm thick, and such that the thickness of the space layer formed when joining the inner and outer wall elements 12 and 13 at their end portions would be 4 mm. Additionally, an aperture portion 13b was formed in the bottom portion of the outer wall element 13 during molding. The outer surface of the inner wall element 12 was covered with aluminum foil which was affixed by means of double-sided tape. Then, the end portions 12a and 13a of the inner and outer containers were joined together by means of vibration welding to result in a double-walled element. This double-walled element was lain down on a gas replacing/filling/sealing apparatus (not shown in the drawings), and after the air was evacuated from the space layer 14 of this double-walled element, the space layer 14 was filled with krypton gas at a filling pressure of approximately atmospheric pressure. Immediately thereafter, a cyanoacrylate adhesive was dripped onto the aperture portion 13b as a seal. Then, the surrounding area was coated with the same adhesive and the aperture portion 13b was sealed by means of the sealing plate 16 to result in the thermal insulator layer 11A.

On the other hand, the inner container 2 and outer container 3 were injection molded from polypropylene resin so as to be 1.5-2.0 mm thick, and such that the thickness of the gap 5 for holding the thermal insulator layer 11A would be approximately 6 mm. Thereafter, the thermal insulator layer 11A was placed inside the gap 5 between the inner and outer containers 2 and 3, and the end portions 2a and 3a of the inner and outer containers were joined together by means of vibration welding so as to result in a thermally insulated container 1A.

Next, in order to produce the lid 51, the top wall element 62 and bottom wall element 63 were molded from EVOH (trade name: EVAL, Kuraray Chemical Co., Ltd.) by means of injection molding so as to be 1 mm thick. During molding, an aperture portion 63b was formed in the upper portion of the top wall element 62. Then, the top surface of the bottom wall element 63 was covered with aluminum foil affixed by means of double-sided tape. Subsequently, the top and bottom wall element end portions 62a and 63a were joined together by means of vibration welding so as to result in a double-walled element. This double-walled element was lain down on a gas replacing/filling/sealing apparatus (not shown in the drawings), and after the air was evacuated from the space layer 64 of this double-walled element, the space layer 64 was filled with krypton gas at a filling pressure of approximately atmospheric pressure. Immediately thereafter, a cyanoacrylate adhesive was dripped onto the aperture portion 63b as a seal. Then, the surrounding area was coated with the same adhesive and the aperture portion 63b was sealed by means of the sealing plate 66 to result in the lid thermal insulator layer 61.

The top surface wall 52 and bottom surface wall 53 were injection molded from polypropylene resin so as to be 1.5-2.0 mm thick, and such as to form a gap 55 for inserting the lid thermal insulator layer 61. Subsequently, the lid thermal insulator layer 61 was placed inside the gap 55 between the top and bottom surface walls 52 and 53, then the top and bottom surface wall end portions 52a and 53a were joined together by means of vibration welding so as to result in the lid 51.

The thermally insulated container 1A and lid 51 produced in the above manner had low manufacturing costs and exhibited excellent long-term thermal insulation capability and durability.

300 cc of hot water at a temperature of 95 °C was put into this thermally insulated container 1A, which was then covered by the lid 51 and left to stand in a room with the temperature controlled to 20 ± 2 °C. After one hour, the temperature of the water was 72 °C.

On the other hand, when a lid having a space layer 64 filled with styrofoam was used, the thickness of the thermal insulator layer filled with styrofoam was required to be thicker than the thermal insulator layer 65 of the lid 51 in order for the temperature to be 72 °C after one hour.

A second example of the present invention will be explained with reference to Figs. 8-10. First, in order to produce a thermally insulated container 1C, a double-walled element having an aperture portion 33a was blow molded using EVOH (trade name: EVAL, Kuraray Chemical Co., Ltd.) such as to be 1 mm thick, and such that the thickness of the space layer would be 4 mm. This double-walled element was lain down on a gas replacing/filling/sealing apparatus (not shown in the drawings), and after the air was evacuated from the space layer 14 of this double-walled element, the space layer 14 was filled with krypton gas at a filling pressure of approximately atmospheric pressure. Immediately thereafter, a cyanoacrylate adhesive was dripped onto the aperture portion 33a as a seal. Then, the surrounding area was coated with the same adhesive and the aperture portion 33a was sealed by means of the sealing plate 16 to result in the thermal insulator layer 11C.

On the other hand, the inner container 2 and outer container 3 were injection molded from polypropylene resin so as to be 1.5-2.0 mm thick, and such that the thickness of the gap 5 for holding the thermal insulator layer 11C would be approximately 6 mm. Then the outer surface of the inner container 2 was covered with aluminum foil which was affixed by means of double-sided tape. Thereafter, the thermal insulator layer 11C was placed inside the gap 5 between the inner and outer containers 2 and 3, and the end portions 2a and 3a of the inner and outer containers were joined together by means of vibration welding so as to result in a thermally insulated container 1C.

Next, in order to produce a lid 71B, a lid double-walled element having an aperture portion 92a was blow molded from EVOH (trade name: EVAL, Kurarary Chemical Co., Ltd.) so as to be approximately 1 mm thick, and such that the thickness of the space layer 84 would be 4 mm.

This lid double-walled element was placed erect on a gas replacing/filling/sealing apparatus (not shown in the drawings) and the air was evacuated from the space layer 84 in the lid double-walled element, after which the space layer 84 was filled with krypton gas at a filling pressure of approximately atmospheric pressure. Immediately thereafter, the aperture portion 92a was sealed by dripping a cyanoacrylate adhesive, then the surrounding area was coated with the same adhesive to seal the aperture portion 92a with the sealing plate 87, thereby resulting in the lid thermal insulator layer 81B.

The top surface wall 72 and bottom surface wall 73 were injection molded from a polypropylene resin so as to be 1.5-2.0 mm thick, and such that the thickness of the gap 75 for inserting the lid thermal insulator layer 81B would be approximately 6 mm. Then, the top surface of the bottom surface wall 73 was covered with aluminum foil which was affixed by means of double-sided tape. Thereafter, the thermal insulator layer 81B was placed inside the gap 75 between the top and bottom surface walls 72 and 73 and the top and bottom surface wall end portions 72a and 73a were joined together by means of vibration welding so as to result in the lid 71B.

With the thermally insulated container 1C and lid 71B produced in the above manner, the manufacturing costs were low, while exhibiting excellent long-term thermal insulation capability and durability. 300 cc of water at a temperature of 95 °C were put into this thermally insulated container 1C, which was then covered by the lid 71B and left to stand in a room with the temperature controlled to 20 ± 2 °C. After one hour, the temperature of the water was 72 °C.

Some of the possible examples of the present invention are given below.
(1) Providing a thermal insulator layer formed from a synthetic resin with a gas permeability of 1 g/m²/24 hr/atm or less with respect to O₂, N₂ and CO₂ inside the gap in the thermally insulated container.
(2) Forming the inner container and outer container of the thermally insulated container from a synthetic resin having a moisture absorbence of 50 g/m²/24 hr or less in conditions of temperature 40 °C and relative humidity 90 %, a bending rigidity of 10,000 kg/cm² or more and/or an Izod impact strength (notched) of 5 kg·cm/cm or more.
(3) Making the low thermal conductivity gas for sealing within the thermal insulator layer of the thermally insulated container one type chosen from the group consisting of xenon, krypton and argon.
(4) Making the thickness of the space layer of the thermally insulated container 1-10 mm.
(5) Forming a radiation prevention material composed of a metal on at least one of either the outer surface of the inner wall element or the inner surface of the outer wall element which faces the space layer of the thermal insulator layer of the thermally insulated container.
(6) Forming a radiation prevention material on at least one of either the outer surface of the inner container or the inner surface of the outer container, or at least one of either the gap between the inner container and the thermal insulator layer or the gap between the outer container and the thermal insulator layer.
(7) Providing a thermal insulator layer formed from a synthetic resin with a gas permeability of 1 g/m²/24 hr/atm or less with respect to O₂, N₂ and CO₂ inside the gap in the lid.
(8) Forming the top surface wall and bottom surface wall of the lid from a synthetic resin having a moisture absorbence of 50 g/m²/24 hr or less in conditions of temperature 40 °C and relative humidity 90 %, a bending rigidity of 10,000 kg/cm² or more and/or an Izod impact strength (notched) of 5 kg·cm/cm or more.
(9) Making the low thermal conductivity gas for sealing within the thermal insulator layer of the lid one type chosen from the group consisting of xenon, krypton and argon.
(10) Making the thickness of the space layer of the lid 1-10 mm.
(11) Forming a radiation prevention material composed of a metal on at least one of either the bottom surface of the upper wall element or the top surface of the bottom wall element which faces the space layer of the lid thermal insulator layer.
(12) Forming a radiation prevention material on at least one of either the bottom surface of the top surface wall or the top surface of the bottom surface wall of the lid, or at least one of either the gap between the top surface wall and the lid thermal insulator layer or the gap between the bottom surface wall and the lid thermal insulator layer.

## Claims

1. A thermally insulated synthetic resin container comprising a double-walled container formed by joining a synthetic resin inner container accommodated inside a synthetic resin outer container with a gap provided therebetween; characterized in that:
a thermal insulator layer, composed of a synthetic resin, having a double-walled structure, and filled with a low thermal conductivity gas having a thermal conductivity less than that of air, is provided inside the gap between said inner container and said outer container.

2. A thermally insulated synthetic resin container in accordance with claim 1, wherein said thermal insulator layer has an inner wall element shaped to conform to the outer surface of said inner container and an outer wall element shaped to conform to the inner surface of said outer container; said inner wall element is accommodated inside said outer wall element with a space layer therebetween; a low thermal conductivity gas is sealed within said space layer; and an end portion of said inner wall element and an end portion of said outer wall element are joined together.

3. A thermally insulated synthetic resin container in accordance with of claims 1 and 2, wherein said thermal insulator layer is a double-walled thermal insulator formed as a single unit with said low thermal conductivity gas sealed between the walls.

4. A thermally insulated synthetic resin container in accordance with any one of claims 1 through 3, wherein said thermal insulator layer is formed from a synthetic resin having a gas permeability of not more than 1 g/m²/24 hr/atm with respect to O₂, N₂ and CO₂.

5. A thermally insulated synthetic resin container in accordance with any one of claims 1 through 4, wherein said inner container and said outer container are formed from a synthetic resin having a moisture absorbence of not more than 50 g/m²/24 hr at a temperature of 40 °C and a relative humidity of 90 %.

6. A thermally insulated synthetic resin container in accordance with any one of claims 1 through 5, wherein said inner container and said outer container are formed from a synthetic resin having a bending rigidity of not less than 10,000 kg/cm².

7. A thermally insulated synthetic resin container in accordance with any one of claims 1 through 6, wherein said inner container and said outer container are formed from a synthetic resin having an Izod impact strength, with notches, of not less than 5 kg·cm/cm.

8. A thermally insulated synthetic resin container in accordance with any one of claims 1 through 7, wherein the low thermal conductivity gas sealed inside said thermal insulator layer is at least one type selected from the group consisting of xenon, krypton, argon and carbon dioxide.

9. A thermally insulated synthetic resin container in accordance with any one of claims 1 through 8, wherein the thickness of the space layer in said thermal insulator layer is 1-10 mm.

10. A thermally insulated synthetic resin container in accordance with any one of claims 1 through 9, wherein a radiation prevention material composed of a metal is provided on at least one of the outer surface of said inner wall element and the inner surface of said outer wall element which face the space layer in said thermal insulator layer.

11. A thermally insulated synthetic resin container in accordance with any one of claims 1 through 10, wherein a radiation prevention material composed of a metal is provided on at least one location selected from the group consisting of the outer surface of said inner container, the inner surface of said outer container, the gap between said inner container and said thermal insulator layer, and the gap between said outer container and said thermal insulator layer.

12. A thermally insulated synthetic resin lid comprising a double-walled lid formed by joining a synthetic resin top surface wall and a synthetic resin bottom surface wall with a gap provided therebetween; characterized in that
a lid thermal insulator layer, composed of a synthetic resin, having a double-walled structure, and filled with a low thermal conductivity gas having a thermal conductivity less than that of air, is provided inside the gap between said top surface wall and said bottom surface wall.

13. A thermally insulated synthetic resin lid in accordance with claim 12, wherein said lid thermal insulator layer has a top wall element shaped to conform to the bottom surface of said top surface wall and a bottom wall element shaped to conform to the top surface of said bottom surface wall; said top wall element and said bottom wall element are provided with a space layer therebetween; a low thermal conductivity gas is sealed within said space layer; and an end portion of said top wall element and an end portion of said bottom wall element are joined together.

14. A thermally insulated synthetic resin lid in accordance with one of claims 12 and 13, wherein said lid thermal insulator layer is a double-walled thermal insulator formed as a single unit with said low thermal conductivity gas sealed between the walls.

15. A thermally insulated synthetic resin lid in accordance with any one of claims 12 through 14, wherein said lid thermal insulator layer is formed from a synthetic resin having a gas permeability of not more than 1 g/m²/24 hr/atm or less with respect to O₂, N₂ and CO₂.

16. A thermally insulated synthetic resin lid in accordance with any one of claims 12 through 15, wherein said top surface wall and said bottom surface wall are formed from a synthetic resin having a moisture absorbence of not more than 50 g/m²/24 hr at a temperature of 40 °C and a relative humidity of 90 %.

17. A thermally insulated synthetic resin lid in accordance with any one of claims 12 through 16, wherein said top surface wall and said bottom surface wall are formed from a synthetic resin having a bending rigidity of not less than 10,000 kg/cm².

18. A thermally insulated synthetic resin lid in accordance with any one of claims 12 through 17, wherein said top surface wall and said bottom surface wall are formed from a synthetic resin having an Izod impact strength, with notches, of not less than 5 kg·cm/cm.

19. A thermally insulated synthetic resin lid in accordance with any one of claims 12 through 18, wherein the low thermal conductivity gas sealed inside said lid thermal insulator layer is at least one type selected from the group consisting of xenon, krypton, argon and carbon dioxide.

20. A thermally insulated synthetic resin lid in accordance with any one of claims 12 through 19, wherein the thickness of the space layer in said lid thermal insulator layer is 1-10 mm.

21. A thermally insulated synthetic resin lid in accordance with any one of claims 12 through 20, wherein a radiation prevention material composed of a metal is provided on at least one of the bottom surface of said top wall element and the top surface of said bottom wall element which face the space layer in said lid thermal insulator layer.

22. A thermally insulated synthetic resin lid in accordance with any one of claims 12 through 21, wherein a radiation prevention material composed of a metal is provided on at least one location selected from the group consisting of the bottom surface of said top surface wall, the top surface of said bottom surface wall, the gap between said top surface wall and said lid thermal insulator layer, and the gap between said bottom surface wall and said lid thermal insulator layer.

23. A thermally insulated synthetic resin container in accordance with claim 2, wherein said inner wall element and outer wall element are formed by injection molding and joined together at their end portions to form said thermal insulator layer.

24. A thermally insulated synthetic resin container in accordance with claim 3, wherein said thermal insulator layer is formed by blow molding.

25. A thermally insulated synthetic resin container in accordance with any one of claims 1 through 11, wherein said thermal insulator layer is formed by a synthetic resin with excellent gas-barrier capabilities and high thermal resistance.

26. A thermally insulated synthetic resin container in accordance with claim 25, wherein said thermal insulator layer is formed by a synthetic resin with high bending strength in temperatures of close to 100°C.

27. A thermally insulated synthetic resin container in accordance with claim 25, wherein said thermal insulator layer is formed by a synthetic resin with high creep resistance in temperatures of close to 100°C.

28. A thermally insulated synthetic resin lid in accordance with claim 13, wherein said top wall element and bottom wall element are formed by injection molding and joined together at their end portions to form said lid thermal insulator layer.

29. A thermally insulated synthetic resin lid in accordance with claim 14, wherein said lid thermal insulator layer is formed by blow molding.

30. A thermally insulated synthetic resin lid in accordance with any one of claims 12 thorugh 22, wherein said lid thermal insulator layer is formed by a synthetic resin with excellent gas-barrier capabilities and high thermal resistance.

31. A thermally insulated synthetic resin lid in accordance with claim 29, wherein said lid thermal insulator layer is formed by a synthetic resin with high bending strength in temperatures of close to 100°C.

32. A thermally insulated synthetic resin lid in accordance with claim 29, wherein said lid thermal insulator layer is formed by a synthetic resin with high creep resistance in temperatures of close to 100°C.

## Patentansprüche

1. Wärmeisolierender Behälter aus synthetischem Harz, umfassend einen doppelwandigen Behälter, der durch Verbinden eines inneren Behälters aus synthetischem Harz, welcher sich innerhalb eines äußeren Behälters aus synthetischem Harz mit einem dazwischen liegenden Spalt befindet, gebildet ist, dadurch gekennzeichnet, daß
eine wärmeisolierende Schicht mit einer doppelwandigen Struktur innerhalb des Spalts zwischen dem inneren Behälter und dem äußeren Behälter bereitgestellt ist, welche sich aus einem synthetischen Harz zusammensetzt und mit einem wärmeniederleitfähigen Gas gefüllt ist, das eine Wärmeleitfähigkeit zeigt, die niedriger ist als diejenige der Luft.

2. Wärmeisolierender Behälter aus synthetischem Harz nach Anspruch 1, wobei die wärmeisolierende Schicht ein Innenwandelement aufweist, das so geformt ist, daß es der äußeren Oberfläche des inneren Behälters angepaßt ist, und ein Außenwandelement, das so geformt ist, daß es der inneren Oberfläche des äußeren Behälters angepaßt ist, wobei sich das Innenwandelement innerhalb des Außenwandelements mit einer dazwischen liegenden Abstandsschicht befindet, ein wärmeniederleitfähiges Gas innerhalb der Abstandsschicht eingesiegelt ist und ein Endbereich des Innenwandelements und ein Endbereich der Außenwandelements miteinander verbunden sind.

3. Wärmeisolierender Behälter aus synthetischem Harz nach Anspruch 1 und 2, wobei die wärmeisolierende Schicht ein doppelwandiger Wärmeisolator ist, der als eine einzelne Einheit mit dem wärmeniederleitfähigen Gas, das zwischen den Wänden eingesiegelt ist, ausgebildet ist.

4. Wärmeisolierender Behälter aus synthetischem Harz nach einem der Ansprüche 1 bis 3, wobei die wärmeisolierende Schicht aus einem synthetischen Harz gebildet ist, das eine Gaspermeabilität von nicht mehr als 1 g/m²/24 h/atm bezüglich O₂, N₂ und CO₂ aufweist.

5. Wärmeisolierender Behälter aus synthetischem Harz nach einem der Ansprüche 1 bis 4, wobei der innere Behälter und der äußere Behälter aus einem synthetischen Harz gebildet sind, das eine Feuchtigkeitsabsorption von nicht mehr als 50 g/m²/24 h bei einer Temperatur von 40 °C und einer relativen Luftfeuchtigkeit von 90 % aufweist.

6. Wärmeisolierender Behälter aus synthetischem Harz nach einem der Ansprüche 1 bis 5, wobei der innere Behälter und der äußere Behälter aus einem synthetischen Harz mit einer Biegungssteife von nicht weniger als 10000 kg/cm² gebildet sind.

7. Wärmeisolierender Behälter aus synthetischem Harz nach einem der Ansprüche 1 bis 6, wobei der innere Behälter und der äußere Behälter aus einem synthetischen Harz mit einer Izod-Kerbschlagzähigkeit von nicht weniger als 5 kg x cm/cm gebildet sind.

8. Wärmeisolierender Behälter aus synthetischem Harz nach einem der Ansprüche 1 bis 7, wobei das innerhalb der wärmeisolierenden Schicht eingesiegelte wärmeniederleitfähige Gas wenigstens eines von dem Typ ist, der ausgewählt ist aus der Gruppe, bestehend aus Xenon, Krypton, Argon und Kohlendioxid.

9. Wärmeisolierender Behälter aus synthetischem Harz nach einem der Ansprüche 1 bis 8, wobei die Dicke der Abstandsschicht in der wärmeisolierenden Schicht 1 bis 10 mm beträgt.

10. Wärmeisolierender Behälter aus synthetischem Harz nach einem der Ansprüche 1 bis 9, wobei ein aus Metall zusammengesetztes, Abstrahlung verhinderndes Material auf wenigstens einer der beiden Oberflächen, nämlich der äußeren Oberfläche des Innenwandelements und der inneren Oberfläche des Außenwandelements bereitgestellt ist, die der Abstandsschicht in der wärmeisolierenden Schicht gegenüberliegen.

11. Wärmeisolierender Behälter aus synthetischem Harz nach einem der Ansprüche 1 bis 10, wobei ein aus Metall zusammengesetztes, Abstrahlung verhinderndes Material an wenigstens einer Stelle bereitgestellt ist, die ausgewählt ist aus der Gruppe, bestehend aus der äußeren Oberfläche des inneren Behälters, der inneren Oberfläche des äußeren Behälters, dem Spalt zwischen dem inneren Behälter und der wärmeisolierenden Schicht und dem Spalt zwischen dem äußeren Behälter und der wärmeisolierenden Schicht.

12. Wärmeisolierender Deckel aus synthetischem Harz, umfassend einen doppelwandigen Deckel, der dadurch gebildet ist, daß eine Wand der oberen Oberfläche aus synthetischem Harz und eine Wand der unteren Oberfläche aus synthetischem Harz miteinander verbunden werden, wobei ein Spalt zwischen ihnen bereitgestellt ist, dadurch gekennzeichnet, daß
eine wärmeisolierende Schicht des Deckels, die sich aus einem synthetischen Harz zusammensetzt und die eine doppelwandige Struktur aufweist und mit einem wärmeniederleitfähigen Gas gefüllt ist, das eine Wärmeleitfähigkeit aufweist, die niedriger ist als diejenige von Luft, innerhalb des Spalts zwischen der Wand der oberen Oberfläche und der Wand an der unteren Oberfläche bereitgestellt ist.

13. Wärmeisolierender Deckel aus synthetischem Harz nach Anspruch 12, wobei die wärmeisolierende Schicht des Deckels ein Wandelement oben aufweist, das so geformt ist, daß es der unteren Oberfläche der Wand der oberen Oberfläche entspricht, und ein Wandelement unten aufweist, das so geformt ist, daß es der oberen Oberfläche der Wand der unteren Oberfläche entspricht, wobei das Wandelement oben und das Wandelement unten mit einer dazwischenliegenden Abstandsschicht ausgebildet sind, ein wärmeniederleitfähiges Gas innerhalb der Abstandsschicht eingesiegelt ist und ein Endbereich des Wandelements oben und ein Endbereich des Wandelemnts unten miteinander verbunden sind.

14. Wärmeisolierender Deckel aus synthetischem Harz nach einem der Ansprüche 12 und 13, wobei die wärmeisolierende Schicht des Deckels ein doppelwandiger Wärmeisolator ist, der als eine einzelne Einheit ausgebildet ist, wobei das wärmeniederleitfähige Gas zwischen den Wänden eingesiegelt ist.

15. Wärmeisolierender Deckel aus synthetischem Harz nach einem der Ansprüche 12 bis 14, wobei die wärmeisolierende Schicht des Deckels aus einem synthetischen Harz gebildet ist, das eine Gaspermeabilität von nicht mehr als 1 g/m²/24 h/atm oder weniger bezüglich O₂, N₂ und CO₂ aufweist.

16. Wärmeisolierender Deckel aus synthetischem Harz nach einem der Ansprüche 12 bis 15, wobei die Wand der oberen Oberfläche und die Wand der unteren Oberfläche aus einem synthetischen Harz gebildet sind, das eine Feuchtigkeitsabsorption von nicht mehr als 50 g/m²/24 h bei einer Temperatur von 40 °C und einer relativen Luftfeuchtigkeit von 90 % aufweist.

17. Wärmeisolierender Deckel aus synthetischem Harz nach einem der Ansprüche 12 bis 16, wobei die Wand der oberen Oberfläche und die Wand der unteren Oberfläche aus einem synthetischen Harz mit einer Biegungssteife von nicht weniger als 10000 kg/cm² gebildet sind.

18. Wärmeisolierender Deckel aus synthetischem Harz nach einem der Ansprüche 12 bis 17, wobei die Wand der oberen Oberfläche und die Wand der unteren Oberfläche aus einem synthetischen Harz mit einer Izod-Kerbschlagzähigkeit von nicht weniger als 5 kg x cm/cm gebildet sind.

19. Wärmeisolierender Deckel aus synthetischem Harz nach einem der Ansprüche 12 bis 18, wobei das innerhalb der wärmeisolierenden Schicht des Deckels eingesiegelte wärmeniederleitfähige Gas wenigstens eines von dem Typ ist, der ausgewählt ist aus der Gruppe, bestehend aus Xenon, Krypton, Argon und Kohlendioxid.

20. Wärmeisolierender Deckel aus synthetischem Harz nach einem der Ansprüche 12 bis 19, wobei die Dicke der Abstandsschicht in der wärmeisolierenden Schicht 1 bis 10 mm beträgt.

21. Wärmeisolierender Deckel aus synthetischem Harz nach einem der Ansprüche 12 bis 20, wobei ein aus Metall zusammengesetztes, Abstrahlung verhinderndes Material auf wenigstens einer der beiden Oberflächen, nämlich der unteren Oberfläche des Wandelements oben und der oberen Oberfläche des Wandelements unten bereitgestellt ist, die der Abstandsschicht in der wärmeisolierenden Schicht des Deckels gegenüberliegen.

22. Wärmeisolierender Deckel aus synthetischem Harz nach einem der Ansprüche 12 bis 21, wobei ein aus Metall zusammengesetztes, Abstrahlung verhinderndes Material an wenigstens einer Stelle bereitgestellt ist, die ausgewählt ist aus der Gruppe, bestehend aus der unteren Oberfläche der Wand der oberen Oberfläche, der oberen Oberfläche der Wand der unteren Oberfläche, dem Spalt zwischen der Wand der oberen Oberfläche und der wärmeisolierenden Schicht des Deckels und dem Spalt zwischen der Wand der unteren Oberfläche und der wärmeisolierenden Schicht des Deckels.

23. Wärmeisolierender Behälter aus synthetischem Harz nach Anspruch 2, wobei das Innenwandelement und das Außenwandelement durch Spritzgießen gebildet und an ihren Endbereichen miteinander verbunden sind, um die wärmeisolierende Schicht zu bilden.

24. Wärmeisolierender Behälter aus synthetischem Harz nach Anspruch 3, wobei die wärmeisolierende Schicht mittels Blasformen gebildet ist.

25. Wärmeisolierender Behälter aus synthetischem Harz nach einem der Ansprüche 1 bis 11, wobei die wärmeisolierende Schicht mit einem synthetischen Harz mit hervorragenden Gasundurchlässigkeitseigenschaften und einer hohen thermischen Beständigkeit gebildet ist.

26. Wärmeisolierender Behälter aus synthetischem Harz nach Anspruch 25, wobei die wärmeisolierende Schicht aus einem synthetischen Harz mit einer hohen Biegungssteife bei nahe 100 °C liegenden Temperaturen gebildet ist.

27. Wärmeisolierender Behälter aus synthetischem Harz nach Anspruch 25, wobei die wärmeisolierende Schicht aus einem synthetischen Harz mit einem hohen Kriechwiderstand bei nahe 100 °C liegenden Temperaturen gebildet ist.

28. Wärmeisolierender Deckel aus synthetischem Harz nach Anspruch 13, wobei das Wandelement oben und das Wandelement unten mittels Spritzgießen gebildet und an ihren Endbereichen miteinander verbunden sind, um die wärmeisolierende Schicht des Deckels zu bilden.

29. Wärmeisolierender Deckel aus synthetischem Harz nach Anspruch 14, wobei die wärmeisolierende Schicht des Deckels durch Blasformen gebildet ist.

30. Wärmeisolierender Deckel aus synthetischem Harz nach einem der Ansprüche 12 bis 22, wobei die wärmeisolierende Schicht des Deckels mit einem synthetischen Harz mit hervorragenden Gasundurchlässigkeitseigenschaften und einer hohen thermischen Beständigkeit gebildet ist.

31. Wärmeisolierender Deckel aus synthetischem Harz nach Anspruch 29, wobei die wärmeisolierende Schicht des Deckels aus einem synthetischen Harz mit einer hohen Biegungssteife bei nahe 100 °C liegenden Temperaturen gebildet ist.

32. Wärmeisolierender Deckel aus synthetischem Harz nach Anspruch 29, wobei die wärmeisolierende Schicht des Deckels mit einem synthetischen Harz mit hohem Kriechwiderstand bei nahe 100 °C liegenden Temperaturen gebildet ist.

## Revendications

1. Récipient en résine synthétique à isolation thermique comprenant un récipient à double paroi obtenu en joignant un récipient interne en résine synthétique disposé à l'intérieur d'un récipient externe en résine synthétique en ménageant un espace libre entre eux, caractérisé en ce que:
une couche d'isolation thermique composée d'une résine synthétique, possédant une structure à double paroi et remplie d'un gaz à faible conductibilité thermique dont la conductibilité thermique est inférieure à celle de l'air, est prévue à l'intérieur de l'espace libre ménagé entre ledit récipient interne et ledit récipient externe.

2. Récipient en résine synthétique à isolation thermique selon la revendication 1, dans lequel ladite couche d'isolation thermique possède un élément de paroi interne configuré pour épouser la forme de la surface externe dudit récipient interne et un élément de paroi externe configuré pour épouser la forme de la surface interne dudit récipient externe; ledit élément de paroi interne est logé à l'intérieur dudit élément de paroi externe avec une couche d'écartement entre eux; on renferme de manière hermétique un gaz à faible conductibilité thermique dans ladite couche d'écartement; et on joint l'une à l'autre une portion terminale dudit élément de paroi interne et une portion terminale dudit élément de paroi externe.

3. Récipient en résine synthétique à isolation thermique selon les revendications 1 et 2, dans lequel ladite couche d'isolation thermique est un isolant thermique à double paroi réalisé sous la forme d'une unité individuelle, ledit gaz à faible conductibilité thermique étant renfermé de manière hermétique entre les parois.

4. Récipient en résine synthétique à isolation thermique selon l'une quelconque des revendications 1 à 3, dans lequel ladite couche d'isolation thermique est réalisée à partir d'une résine synthétique dont la perméabilité aux gaz n'est pas supérieure à 1 g/m²/24 heures/atm par rapport à O₂, à N₂ et à CO₂.

5. Récipient en résine synthétique à isolation thermique selon l'une quelconque des revendications 1 à 4, dans lequel ledit récipient interne et ledit récipient externe sont réalisés à partir d'une résine synthétique dont l'absorption de l'humidité n'est pas supérieure à 50 g/m²/24 heures à une température de 40°C et sous une humidité relative de 90%.

6. Récipient en résine synthétique à isolation thermique selon l'une quelconque des revendications 1 à 5, dans lequel ledit récipient interne et ledit récipient externe sont réalisés à partir d'une résine synthétique dont la rigidité à la flexion n'est pas inférieure à 10.000 kg/cm².

7. Récipient en résine synthétique à isolation thermique selon l'une quelconque des revendications 1 à 6, dans lequel ledit récipient interne et ledit récipient externe sont réalisés à partir d'une résine synthétique dont la résistance aux chocs selon Izod, calculée sur des bâtons entaillés, n'est pas inférieure à 5 kg.cm/cm.

8. Récipient en résine synthétique à isolation thermique selon l'une quelconque des revendications 1 à 7, dans lequel le gaz à faible conductibilité thermique renfermé de manière hermétique à l'intérieur de ladite couche d'isolation thermique représente au moins un type choisi parmi le groupe constitué par le xénon, le crypton, l'argon et le dioxyde de carbone.

9. Récipient en résine synthétique à isolation thermique selon l'une quelconque des revendications 1 à 8, dans lequel l'épaisseur de la couche d'écartement dans ladite couche d'isolation thermique s'élève de 1 à 10 mm.

10. Récipient en résine synthétique à isolation thermique selon l'une quelconque des revendications 1 à 9, dans lequel on prévoit une matière s'opposant aux rayonnements composée d'un métal sur au moins une surface choisie parmi la surface externe dudit élément de paroi interne et la surface interne dudit élément de paroi externe qui est opposée à la couche d'écartement dans ladite couche d'isolation thermique.

11. Récipient en résine synthétique à isolation thermique selon l'une quelconque des revendications 1 à 10, dans lequel on prévoit une matière s'opposant aux rayonnements composée d'un métal à au moins un endroit choisi parmi le groupe constitué par la surface externe dudit récipient interne, la surface interne dudit récipient externe, l'espace libre ménagé entre ledit récipient interne et ladite couche d'isolation thermique et l'espace libre ménagé entre ledit récipient externe et ladite couche d'isolation thermique.

12. Couvercle en résine synthétique à isolation thermique comprenant un couvercle à double paroi obtenu en joignant une paroi de surface supérieure en résine synthétique et une paroi de surface inférieure en résine synthétique en ménageant un espace libre entre elles, caractérisé en ce qu'on prévoit
un couvercle à isolation thermique composé d'une résine synthétique possédant une structure à double paroi et rempli avec un gaz à faible conductibilité thermique dont la conductibilité thermique est inférieure à celle de l'air, à l'intérieur de l'espace libre ménagé entre ladite paroi de surface supérieure et ladite paroi de surface inférieure.

13. Couvercle en résine synthétique à isolation thermique selon la revendication 12, dans lequel ladite couche d'isolation thermique du couvercle possède un élément de paroi supérieure configuré pour épouser la forme de la surface inférieure de ladite paroi de surface supérieure et un élément de paroi inférieure configuré pour épouser la forme de la surface supérieure de ladite paroi de surface inférieure; ledit élément de paroi supérieure et ledit élément de paroi inférieure sont munis d'une couche d'écartement disposée entre eux; on renferme de manière hermétique un gaz à faible conductibilité thermique dans ladite couche d'écartement; et on joint l'une à l'autre une portion terminale dudit élément de paroi supérieure et une portion terminale dudit élément de paroi inférieure.

14. Couvercle en résine synthétique à isolation thermique selon l'une quelconque des revendications 12 et 13, dans lequel ladite couche d'isolation thermique du couvercle est un isolant thermique à double paroi réalisé sous la forme d'une unité individuelle, ledit gaz à faible conductibilité thermique étant renfermé de manière hermétique entre les parois.

15. Couvercle en résine synthétique à isolation thermique selon l'une quelconque des revendications 12 à 14, dans lequel ladite couche d'isolation thermique du couvercle est formée à partir d'une résine synthétique dont la perméabilité aux gaz n'est pas supérieure à 1 g/m²/24 heures/atm ou moins par rapport à O₂, à N₂ et à CO₂.

16. Couvercle en résine synthétique à isolation thermique selon l'une quelconque des revendications 12 à 15, dans lequel ladite paroi de surface supérieure et ladite paroi de surface inférieure sont formées à partir d'une résine synthétique dont l'absorption de l'humidité n'est pas supérieure à 50 g/m²/24 heures à une température de 40°C et sous une humidité relative de 90%.

17. Couvercle en résine synthétique à isolation thermique selon l'une quelconque des revendications 12 à 16, dans lequel ladite paroi de surface supérieure et ladite paroi de surface inférieure sont formées à partir d'une résine synthétique dont la rigidité à la flexion n'est pas inférieure à 10.000 kg/cm².

18. Couvercle en résine synthétique à isolation thermique selon l'une quelconque des revendications 12 à 17, dans lequel ladite paroi de surface supérieure et ladite paroi de surface inférieure sont formées à partir d'une résine synthétique dont la résistance aux chocs selon Izod, calculée sur des bâtons entaillés, n'est pas inférieure à 5 kg.cm/cm.

19. Couvercle en résine synthétique à isolation thermique selon l'une quelconque des revendications 12 à 18, dans lequel le gaz à faible conductibilité thermique renfermé de manière hermétique dans ladite couche d'isolation thermique du couvercle représente au moins un type choisi parmi le groupe constitué par le xénon, le crypton, l'argon et le dioxyde de carbone.

20. Couvercle en résine synthétique à isolation thermique selon l'une quelconque des revendications 12 à 19, dans lequel l'épaisseur de la couche d'écartement dans ladite couche d'isolation thermique du couvercle s'élève de 1 à 10 mm.

21. Couvercle en résine synthétique à isolation thermique selon l'une quelconque des revendications 12 à 20, dans lequel on prévoit une matière s'opposant aux rayonnements composée d'un métal sur au moins une surface choisie parmi la surface inférieure dudit élément de paroi supérieure et la surface supérieure dudit élément de paroi inférieure qui est opposée à la couche d'écartement dans ladite couche d'isolation thermique du couvercle.

22. Couvercle en résine synthétique à isolation thermique selon l'une quelconque des revendications 12 à 21, dans lequel on prévoit une matière s'opposant aux rayonnements composée d'un métal à au moins un endroit choisi parmi le groupe constitué par la surface inférieure de ladite paroi de surface supérieure, la surface supérieure de ladite paroi de surface inférieure, l'espace libre ménagé entre ladite paroi de surface supérieure et ladite couche d'isolation thermique du couvercle et l'espace libre ménagé entre ladite paroi de surface inférieure et ladite couche d'isolation thermique du couvercle.

23. Récipient en résine synthétique à isolation thermique selon la revendication 2, dans lequel ledit élément de paroi interne et ledit élément de paroi externe sont formés par moulage par injection et joints l'un à l'autre à leurs portions terminales pour former ladite couche d'isolation thermique.

24. Récipient en résine synthétique à isolation thermique selon la revendication 3, dans lequel ladite couche d'isolation thermique est formée par moulage par extrusion-soufflage.

25. Récipient en résine synthétique à isolation thermique selon l'une quelconque des revendications 1 à 11, dans lequel ladite couche d'isolation thermique est formée par une résine synthétique possédant des capacités excellentes d'arrêt des gaz, ainsi qu'une résistance thermique élevée.

26. Récipient en résine synthétique à isolation thermique selon la revendication 25, dans lequel ladite couche d'isolation thermique est formée par une résine synthétique possédant une résistance élevée à la flexion à des températures proches de 100°C.

27. Récipient en résine synthétique à isolation thermique selon la revendication 25, dans lequel ladite couche d'isolation thermique est formée par une résine synthétique possédant une résistance élevée au flambage à des températures proches de 100°C.

28. Couvercle en résine synthétique à isolation thermique selon la revendication 13, dans lequel ledit élément de paroi supérieure et ledit élément de paroi inférieure sont formés par moulage par injection et joints l'un à l'autre à leurs portions terminales pour former ladite couche d'isolation thermique dudit couvercle.

29. Couvercle en résine synthétique à isolation thermique selon la revendication 14, dans lequel ladite couche d'isolation thermique du couvercle est formée par moulage par extrusion-soufflage.

30. Couvercle en résine synthétique à isolation thermique selon l'une quelconque des revendications 12 à 22, dans lequel ladite couche d'isolation thermique du couvercle est formée par une résine synthétique possédant des capacités d'arrêt des gaz excellentes et une résistance thermique élevée.

31. Couvercle en résine synthétique à isolation thermique selon la revendication 29, dans lequel ladite couche d'isolation thermique du couvercle est formée par une résine synthétique possédant une résistance élevée à la flexion à des températures proches de 100°C.

32. Couvercle en résine synthétique à isolation thermique selon la revendication 29, dans lequel ladite couche d'isolation thermique du couvercle est formée par une résine synthétique possédant une résistance élevée au flambage à des températures proches de 100°C.
